(19) Europäisches Patentamt
European Patent Office
Office européen des brevets

(11) EP 4 357 405 A1

(12) EUROPEAN PATENT APPLICATION
published in accordance with Art. 153(4) EPC

(43) Date of publication:
**24.04.2024 Bulletin 2024/17**

(21) Application number: **22825030.4**

(22) Date of filing: **15.06.2022**

(51) International Patent Classification (IPC):
***C08L 23/00*** *(2006.01)*

(52) Cooperative Patent Classification (CPC):
**C08L 23/00**

(86) International application number:
**PCT/JP2022/023965**

(87) International publication number:
**WO 2022/265042 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2021 JP 2021100429**

(71) Applicant: **ADEKA CORPORATION**
**Arakawa-ku**
**Tokyo**
**116-8554 (JP)**

(72) Inventors:
- **MATSUMOTO, Yuji**
  **Saitama-shi, Saitama 336-0022 (JP)**
- **UEDA, Naoto**
  **Saitama-shi, Saitama 336-0022 (JP)**
- **MASAI, Shogo**
  **Saitama-shi, Saitama 336-0022 (JP)**

(74) Representative: **Gill Jennings & Every LLP**
**The Broadgate Tower**
**20 Primrose Street**
**London EC2A 2ES (GB)**

# (54) NUCLEATING AGENT COMPOSITION, RESIN COMPOSITION, MOLDED ARTICLE THEREOF, AND METHOD FOR MANUFACTURING RESIN COMPOSITION

(57) Provided are: a nucleating agent composition capable of imparting excellent mechanical properties to a molded article containing a polyolefin-based resin; a resin composition containing the nucleating agent composition; the molded article having excellent mechanical properties; and a method for manufacturing the resin composition. The nucleating agent composition is characterized by containing at least one type of a nucleating agent for a polyolefin-based resin, wherein a β crystal fraction ranges from 0.2% to 71% as calculated by the following method. Through the use of a sample sampled from the pellets of the resin composition containing the nucleating agent composition, differential scanning calorimetry is performed according to a predetermined program to find a DSC curve, Q = f(θ), with the horizontal axis being temperature θ(°C) and the vertical axis being heat flow rate Q(mW), and a baseline, g(θ), thereby obtaining a baseline-corrected DSC curve, Q' = h(θ) = f(θ) - g(θ). Subsequently, according to a predetermined procedure, a line area St and a β crystal area $S_\beta$ are found, thereby calculating the β crystal fraction (%).

$$\beta \text{ crystal fraction} = S_\beta/S_t \times 100(\%)$$

FIG. 2

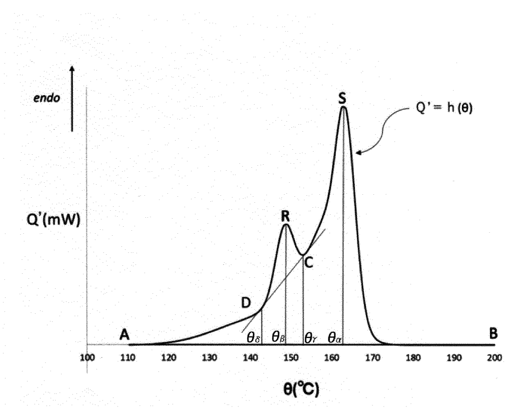


EP 4 357 405 A1

## Description

TECHNICAL FIELD

The present invention relates to a nucleating agent composition, a resin composition, a molded article thereof, and a method for manufacturing the resin composition. More specifically, the present invention relates to a nucleating agent composition capable of imparting excellent mechanical properties to a molded article containing a polyolefin-based resin, a resin composition containing the same, a molded article thereof having excellent mechanical properties, and a method for manufacturing the resin composition.

BACKGROUND ART

Among various general-purpose thermoplastic resins, polyolefin-based resins are used in a wide range of applications as one of plastic materials having the broadest application field in terms of physical properties, molding processability, price, and the like.

Molded articles formed from a polyolefin-based resin are sometimes required to have excellent mechanical properties. As one method for imparting excellent mechanical properties to a molded article formed from a polyolefin-based resin, a method of adding a nucleating agent to a polyolefin-based resin is known. As a nucleating agent to be added to a polyolefin-based resin, for example, Patent Document 1 below proposes a nucleating agent containing an aromatic phosphate metal salt and an amide compound.

RELATED ART DOCUMENT

PATENT DOCUMENT

Patent Document 1: JP 2008-120931A

SUMMARY OF THE INVENTION

PROBLEMS TO BE SOLVED BY THE INVENTION

However, the nucleating agent described in Patent Document 1 above has room for further improvement from the viewpoint of imparting sufficient mechanical properties to molded articles.

Hence, an object of the present invention is to provide a nucleating agent composition capable of imparting excellent mechanical properties to a molded article containing a polyolefin-based resin, a resin composition containing the same, a molded article thereof having excellent mechanical properties, and a method for manufacturing the resin composition.

MEANS FOR SOLVING THE PROBLEMS

As a result of intensive studies to solve the above problems, the present inventors have discovered that the above problems can be solved by a nucleating agent composition such that when it is added in a predetermined amount to a predetermined polyolefin-based resin, the β crystal fraction of the polyolefin-based resin is within a specific range. The present inventors have thus completed the present invention.

Specifically, the nucleating agent composition of the present invention is characterized by containing at least one type of a nucleating agent for a polyolefin-based resin, wherein a β crystal fraction ranges from 0.2% to 71% as calculated by the following method.

<Method for calculating β crystal fraction>

(1) 100 parts by mass of homopolypropylene having a melt flow rate of 8 g/10 minutes in accordance with JIS K 7210 as measured under conditions of a temperature of 230°C and a load of 2.16 kg, 0.10 parts by mass of the nucleating agent composition, 0.05 parts by mass of tetrakis[methylene-3-(3',5'-tert-butyl-4'-hydroxyphenyl)propionate]methane, 0.1 parts by mass of tris(2,4-di-tert-butylphenyl)phosphite), and 0.05 parts by mass of calcium stearate are blended, and then mixed for 1 minute using an FM mixer to obtain a resin blend.
(2) Using a twin-screw extruder, the resin blend is melt-kneaded at a melting temperature of 230°C, and the resulting

melt-kneaded product is granulated to obtain pellets.

(3) After the pellets are dried at 80°C for 8 hours, 10 mg of a sample is sampled from the dried pellets and then introduced into a differential scanning calorimeter.

(4) Using the differential scanning calorimeter, differential scanning calorimetry is performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, Q = f(θ), with the horizontal axis being temperature θ(°C) and the vertical axis being heat flow rate Q(mW). Here, regarding the vertical axis, the endothermic direction is assumed to be positive.

(5) In a portion of the DSC curve, which corresponds to the second temperature rising process in the temperature program, a baseline g(θ) = (f(200) - f(110))/90 × (θ - 110) + f(110) is subtracted from f(θ) to obtain a baseline-corrected DSC curve, Q' = h(θ) = f(θ) - g(θ).

(6) The area of a region surrounded by the portion of 110 ≤ θ ≤ 200 of the curve Q' = h(θ) and line segment AB connecting point A (110, 0) and point B (200, 0) is determined to be St. Here, St is represented by the following formula.

$$S_t = \int_{110}^{200} h(\theta)\, d\theta$$

(7) Two maximum points in the range of 110 ≤ θ ≤ 200 on the curve Q' = h(θ) are determined to be $R(\theta_\beta, h(\theta_\beta))$ and $S(\theta_\alpha, h(\theta_\alpha))$ (where $\theta_\beta < \theta_\alpha$), and the minimum point in the range of $\theta_\beta < \theta < \theta_\alpha$ on the curve Q' = h(θ) is determined to be $C(\theta\gamma, h(\theta_\gamma))$. A tangent is drawn to pass through point C and come into contact with the curve Q' = h(θ) in the range of $110 < \theta < \theta_\beta$, determining the contact point as point $D(\theta_\delta, h(\theta_\delta))$. Then, the area of a region surrounded by the portion of $\theta_\delta \le \theta \le \theta_\gamma$ of the curve Q' = h(θ) and line segment DC connecting point D and point C is determined to be $S_\beta$.

Here, $S_\beta$ is represented by the following formula,

$$S_\beta = \int_{\theta_\delta}^{\theta_\gamma} j(\theta)\, d\theta$$

wherein $j(\theta) = h(\theta) - i(\theta)$ and $i(\theta) = (h(\theta\gamma) - h(\theta_\delta))/(\theta_\gamma - \theta_\delta) \times (\theta - \theta_\gamma) + h(\theta_\gamma)$.

(8) A β crystal fraction (%) is calculated from $S_t$ and $S_\beta$ above by the following formula.

$$\beta \text{ crystal fraction} = S_\beta / S_t \times 100(\%)$$

The nucleating agent composition of the present invention preferably contains an o-crystal nucleating agent that promotes the α crystal formation by a polyolefin-based resin.

Further, the nucleating agent composition of the present invention preferably contains a β-crystal nucleating agent that promotes the β-crystal formation by a polyolefin-based resin, and the β-crystal nucleating agent more preferably contains at least one type selected from the group consisting of a carboxylic acid metal salt and a quinacridone compound.

Further, the resin composition of the present invention contains a polyolefin-based resin and at least one type of a nucleating agent for a polyolefin-based resin, wherein a β crystal fraction ranges from 0.2% to 71% as calculated by the following method.

<Method for calculating β crystal fraction>

(1) After the resin composition is dried at 80°C for 8 hours, 10 mg of a sample is sampled from the dried pellets, and then the sample is introduced into a differential scanning calorimeter.

(2) Using the differential scanning calorimeter, differential scanning calorimetry is performed according to a temperature program of heating the sample from 25°C to 230°C at a rate of 50°C/min, maintaining the sample at 230°C

for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, Q = f(θ), with the horizontal axis being temperature θ (°C) and the vertical axis being heat flow rate Q(mW). Here, regarding the vertical axis, the endothermic direction is assumed to be positive.

(3) In a portion of the DSC curve above, which corresponds to the second temperature rising process in the temperature program, a baseline $g(\theta) = (f(200) - f(110))/90 \times (\theta - 110) + f(110)$ is subtracted from f(θ) to obtain a baseline-corrected DSC curve, $Q' = h(\theta) = f(\theta) - g(\theta)$.

(4) The area of a region surrounded by the portion of $110 \leq \theta \leq 200$ of the curve $Q' = h(\theta)$ and line segment AB connecting point A (110, 0) and point B (200, 0) is determined to be St. Here, St is represented by the following formula.

$$S_t = \int_{110}^{200} h(\theta)\, d\theta$$

(5) Two maximum points in the range of $110 \leq \theta \leq 200$ on the curve $Q' = h(\theta)$ are determined to be $R(\theta_\beta, h(\theta_\beta))$ and $S(\theta_\alpha, h(\theta_\alpha))$ (where $\theta_\beta < \theta_\alpha$), and the minimum point in the range of $\theta_\beta < \theta < \theta_\alpha$ on the curve $Q' = h(\theta)$ is determined to be $C(\theta\gamma, h(\theta_\gamma))$. Then a tangent is drawn to pass through point C and come into contact with the curve $Q' = h(\theta)$ in the range of $110 < \theta < \theta_\beta$, determining the contact point as point D $(\theta_\delta, h(\theta_\delta))$. Then, the area of a region surrounded by the portion of $\theta_\delta \leq \theta \leq \theta_\gamma$ of the curve $Q' = h(\theta)$ and line segment DC connecting point D and point C is determined to be $S_\beta$.

Here, $S_\beta$ is represented by the following formula,

$$S_\beta = \int_{\theta_\delta}^{\theta_\gamma} j(\theta)\, d\theta$$

wherein $j(\theta) = h(\theta) - i(\theta)$ and $i(\theta) = (h(\theta\gamma) - h(\theta_\delta))/(\theta_\gamma - \theta_\delta) \times (\theta - \theta_\gamma) + h(\theta_\gamma)$.

(6) A β crystal fraction (%) is calculated from $S_t$ and $S_\beta$ above by the following formula.

$$\beta \text{ crystal fraction} = S_\beta/S_t \times 100(\%)$$

The resin composition of the present invention preferably contains an α-crystal nucleating agent that promotes the α crystal formation by a polyolefin-based resin.

Further, the resin composition of the present invention preferably contains a β-crystal nucleating agent that promotes the β-crystal formation by a polyolefin-based resin, and the β-crystal nucleating agent more preferably contains at least one type selected from the group consisting of a carboxylic acid metal salt and a quinacridone compound.

Furthermore, the molded article of the present invention is characterized in that it is obtained by molding the above resin composition.

Furthermore, the method for manufacturing the resin composition of the present invention is characterized by involving a blending step of blending at least one type of a nucleating agent for a polyolefin-based resin in a polyolefin-based resin, in such a manner that a β crystal fraction ranges from 0.2% to 71% as calculated by the following method.

<Method for calculating β crystal fraction>

(1) After the resin composition is dried at 80°C for 8 hours, 10 mg of a sample is sampled from the dried pellets, and then the sample is introduced into a differential scanning calorimeter.

(2) Using the differential scanning calorimeter, differential scanning calorimetry is performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, Q = f(θ), with the horizontal axis being temperature θ(°C) and the vertical axis being heat flow rate of Q(mW). Here, regarding the

vertical axis, the endothermic direction is assumed to be positive.

(3) In a portion of the DSC curve above, which corresponds to the second temperature rising process in the temperature program, a baseline $g(\theta) = (f(200) - f(110))/90 \times (\theta - 110) + f(110)$ is subtracted from $f(\theta)$ to obtain a baseline-corrected DSC curve, $Q' = h(\theta) = f(\theta) - g(\theta)$.

(4) The area of a region surrounded by the portion of $110 \leq \theta < 200$ of the curve $Q' = h(\theta)$ and line segment AB connecting point A (110, 0) and point B (200, 0) is determined to be St. Here, St is represented by the following formula.

$$S_t = \int_{110}^{200} h(\theta)\, d\theta$$

(5) Two maximum points in the range of $110 \leq \theta \leq 200$ on the curve $Q' = h(\theta)$ are determined to be $R(\theta_\beta, h(\theta_\beta))$ and $S(\theta_\alpha, h(\theta_\alpha))$ (where $\theta_\beta < \theta_\alpha$), and the minimum point in the range of $\theta_\beta < \theta < \theta_\alpha$ on the curve $Q' = h(\theta)$ is determined to be $C(\theta\gamma, h(\theta_\gamma))$. Then a tangent that passes through point C and comes into contact with the curve $Q' = h(\theta)$ in the range of $110 < \theta < \theta_\beta$, determining the contact point as point D $(\theta_\delta, h(\theta_\delta))$. Then, the area of a region surrounded by the portion of $\theta_\delta \leq \theta \leq \theta_\gamma$ of the curve $Q' = h(\theta)$ and line segment DC connecting point D and point C is determined to be $S_\beta$.

Here, $S_\beta$ is represented by the following formula,

$$S_\beta = \int_{\theta_\delta}^{\theta_\gamma} j(\theta)\, d\theta$$

wherein $j(\theta) = h(\theta) - i(\theta)$ and $i(\theta) = (h(\theta\gamma) - h(\theta_\delta))/(\theta_\gamma - \theta_\delta) \times (\theta - \theta_\gamma) + h(\theta_\gamma)$.

(6) A $\beta$ crystal fraction (%) is calculated from the above $S_t$ and $S_\beta$ by the following formula.

$$\beta \text{ crystal fraction} = S_\beta / S_t \times 100(\%)$$

EFFECTS OF THE INVENTION

According to the present invention, a nucleating agent composition capable of imparting excellent mechanical properties to a molded article containing a polyolefin-based resin, a resin composition containing the same, a molded article thereof having excellent mechanical properties, and a method for manufacturing the resin composition can be provided.

BRIEF DESCRIPTION OF THE DRAWINGS

FIG. 1 is a graph of a portion of a DSC curve, $Q = f(\theta)$, wherein the portion corresponds to the second temperature rising process, and the DSC curve was obtained by differential scanning calorimetry performed for the resin composition to which nucleating agent composition 2 had been added in Examples.

FIG. 2 is a graph of a baseline-corrected DSC curve, $Q' = h(\theta) = f(\theta) - g(\theta)$, obtained by subjecting a portion of a DSC curve, $Q = f(\theta)$, to baseline correction, wherein the portion corresponds to the second temperature rising process, and the DSC curve was obtained for the resin composition to which nucleating agent composition 2 had been added in Examples.

MODE FOR CARRYING OUT THE INVENTION

Hereinafter, an embodiment of the present invention will be described in detail. First, the nucleating agent composition according to the present embodiment will be described.

<Nucleating agent composition>

The nucleating agent composition of the present embodiment contains at least one type of a nucleating agent for a polyolefin-based resin, wherein a β crystal fraction ranges from 0.2% to 71% as calculated by the following method.

<Method for calculating β crystal fraction>

(1) 100 parts by mass of homopolypropylene having a melt flow rate of 8 g/10 minutes in accordance with JIS K 7210 as measured under conditions of a temperature of 230°C and a load of 2.16 kg, 0.10 parts by mass of the nucleating agent composition, 0.05 parts by mass of tetrakis[methylene-3-(3',5'-tert-butyl-4'-hydroxyphenyl)propionate]methane, 0.1 parts by mass of tris(2,4-di-tert-butylphenyl)phosphite), and 0.05 parts by mass of calcium stearate are blended, and then mixed for 1 minute using an FM mixer to obtain a resin blend.
(2) Using a twin-screw extruder, the resin blend is melt-kneaded at a melting temperature of 230°C, and the resulting melt-kneaded product is granulated to obtain pellets.
(3) After the pellets are dried at 80°C for 8 hours, 10 mg of a sample is sampled from the dried pellets and then introduced into a differential scanning calorimeter.
(4) Using the differential scanning calorimeter, differential scanning calorimetry is performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, Q = f(θ), with the horizontal axis being temperature θ(°C) and the vertical axis being heat flow rate Q(mW). Here, regarding the vertical axis, the endothermic direction is assumed to be positive.
(5) In a portion of the DSC curve, which corresponds to a second temperature rising process in the temperature program, a baseline g(θ) = (f(200) - f(110))/90 × (θ - 110) + f(110) is subtracted from f(θ) to obtain a baseline-corrected DSC curve, Q' = h(θ) = f(θ) - g(θ).
(6) The area of a region surrounded by the portion of 110 ≤ θ≤ 200 of the curve Q' = h(θ) and line segment AB connecting point A (110, 0) and point B (200, 0) is determined to be St. Here, St is represented by the following formula.

$$S_t = \int_{110}^{200} h(\theta)\, d\theta$$

(7) Two maximum points in the range of 110 ≤ θ ≤ 200 on the curve Q' = h(θ) are determined to be R($\theta_\beta$,h($\theta_\beta$)) and S($\theta_\alpha$,h($\theta_\alpha$)) (where $\theta_\beta < \theta_\alpha$), and the minimum point in the range of $\theta_\beta < \theta < \theta_\alpha$ on the curve Q' = h(θ) is determined to be C(θγ,h($\theta_\gamma$)). A tangent is drawn to pass through point C and come into contact with the curve Q' = h(θ) in the range of 110 < θ < $\theta_\beta$, determining the contact point as point D($\theta_\delta$,h($\theta_\delta$)). Then, the area of a region surrounded by the portion of $\theta_\delta \le \theta \le \theta_\gamma$ of the curve Q' = h(θ) and line segment DC connecting point D and point C is determined to be $S_\beta$.
Here, $S_\beta$ is represented by the following formula,

$$S_\beta = \int_{\theta_\delta}^{\theta_\gamma} j(\theta)\, d\theta$$

wherein j(θ) = h(θ) - i(θ) and i(θ) = (h(θγ) - h($\theta_\delta$))/($\theta_\gamma$ - $\theta_\delta$) × (θ - $\theta_\gamma$) + h($\theta_\gamma$).
(8) A β crystal fraction (%) is calculated from $S_t$ and $S_\beta$ by the following formula

$$\beta \text{ crystal fraction} = S_\beta/S_t \times 100(\%)$$

FIG. 1 is a graph of a portion of a DSC curve, Q = f(θ), wherein the portion corresponds to the second temperature rising process, and the DSC curve was obtained by differential scanning calorimetry performed for the resin composition

to which nucleating agent composition 2 had been added in Examples described later. FIG. 2 is a graph of a baseline-corrected DSC curve, Q' = h(θ) = f(θ) - g(θ), obtained by subjecting a portion of a DSC curve, Q = f(θ), to baseline correction, wherein the portion corresponds to the second temperature rising process, and the DSC curve was obtained for the resin composition to which nucleating agent composition 2 had been added in Examples. Specifically, "β crystal fraction (%)" refers to the proportion of the area $S_\beta$ of a region surrounded by the curve Q' and line segment CD with respect to the area St of a region surrounded by the curve Q' and line segment AB in the range of 110°C to 200°C.

According to the nucleating agent composition of the present embodiment, excellent mechanical properties can be imparted to a molded article containing a polyolefin-based resin.

As described above, in the nucleating agent composition of the present embodiment, a β crystal fraction calculated by the above method ranges from 0.2% to 71%. From the viewpoint of imparting more excellent mechanical properties to the molded article, the β crystal fraction ranges from preferably 0.3% to 70.0%, more preferably 3.0% to 45.0%, furthermore preferably 5.0% to 30.0%, and even more preferably 10.0% to 25.0%.

The β crystal fraction can be controlled, for example, by appropriately selecting the type and blending ratio of a nucleating agent for a polyolefin-based resin contained in the nucleating agent composition.

Examples of the nucleating agent for a polyolefin-based resin, which is contained in the nucleating agent composition of the present embodiment, include an α-crystal nucleating agent that promotes α crystal formation by a polyolefin-based resin, and a β-crystal nucleating agent that promotes the β-crystal formation by a polyolefin-based resin.

Examples of the α-crystal nucleating agent include an aromatic phosphate metal salt represented by the following general formula (1), an alicyclic dicarboxylic acid metal salt represented by the following general formula (2), aromatic carboxylic acid metal salts such as a sodium benzoate and an aluminum 4-tert-butylbenzoate, aliphatic carboxylic acid metal salts such as a sodium adipate, and a diacetal compound represented by the following general formula (3).

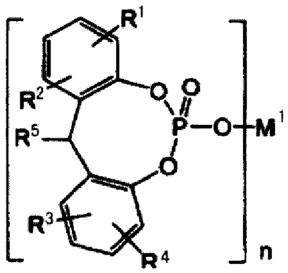

(1)

Here, in general formula (1), $R^1$ to $R^5$ each independently represent a hydrogen atom or an alkyl group having 1 to 6 carbon atoms, n represents 1 or 2, and when n is 1, $M^1$ represents an alkali metal or dihydroxyaluminum, and when n is 2, $M^1$ represents an alkaline earth metal, zinc or hydroxyaluminum.

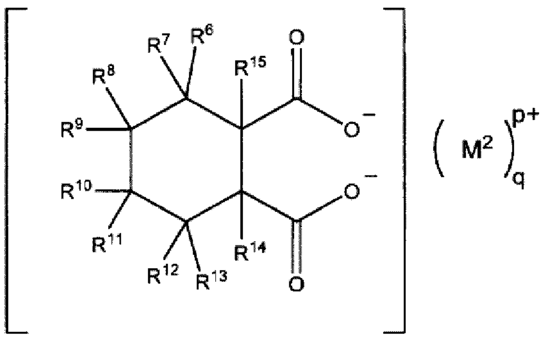

(2)

Here, in general formula (2), $R^6$ to $R^{15}$ each independently represent a hydrogen atom or an alkyl group having 1 to 6 carbon atoms, p represents 1 or 2, and when p is 1, q is 2, $M^2$ represents an alkali metal or dihydroxyaluminum, when p is 2, q is 1, and $M^2$ represents an alkaline earth metal, zinc or hydroxyaluminum. $R^6$ and $R^{13}$ may be linked together to form a ring structure.

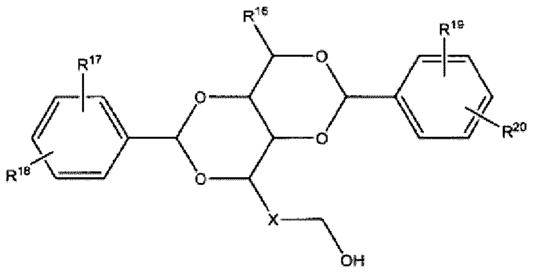

(3)

Here, in general formula (3), $R^{16}$ represents a hydrogen atom or an alkyl group having 1 to 6 carbon atoms. $R^{17}$ to $R^{20}$ each independently represent a hydrogen atom, a halogen atom, a cyano group, an alkyl group having 1 to 6 carbon atoms or an alkoxy group having 1 to 6 carbon atoms, or $R^{17}$ and $R^{18}$ or $R^{19}$ and $R^{20}$ are linked together to represent an alkylene group having 3 to 6 carbon atoms or an alkylenedioxy group having 1 to 4 carbon atoms. X represents a single bond, a -CH(OH)- group or a -CH(OH)CH(OH)- group.

In general formula (1), examples of an alkyl group having 1 to 6 carbon atoms represented by $R^1$ to $R^5$ include a methyl group, an ethyl group, an n-propyl group, an isopropyl group, a cyclopropyl group, an n-butyl group, a sec-butyl group, a tert-butyl group, an isobutyl group, a cyclobutyl group, an n-amyl group, a tert-amyl group, a cyclopentyl group, an n-hexyl group, and a cyclohexyl group. From the viewpoint of imparting more excellent mechanical properties to molded articles, it is particularly preferred that $R^1$ to $R^4$ are tert-butyl groups. From the viewpoint of imparting more excellent mechanical properties to molded articles, $R^5$ is preferably a hydrogen atom or a methyl group, particularly preferably a hydrogen atom.

When $M^1$ represents an alkali metal, examples of the alkali metal include lithium, sodium, and potassium. Of these, lithium and sodium are preferred, and sodium is particularly preferred. Moreover, when $M^1$ represents an alkaline earth metal, examples of the alkaline earth metal include magnesium, calcium, and barium.

From the viewpoint of imparting even more excellent mechanical properties to molded articles, n is preferably 1.

Specific examples of the aromatic phosphate metal salt represented by general formula (1) include those described below. One type thereof may be contained individually, or two or more types thereof may be contained in combination. However, the aromatic phosphate metal salt represented by general formula (1) is not limited to these examples.

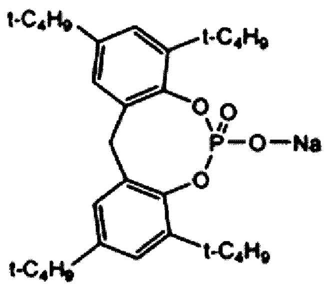

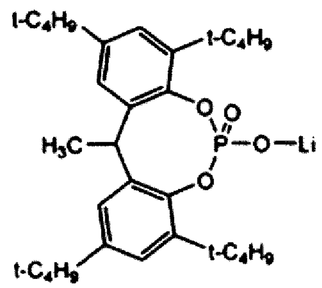

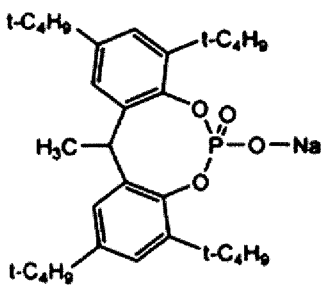

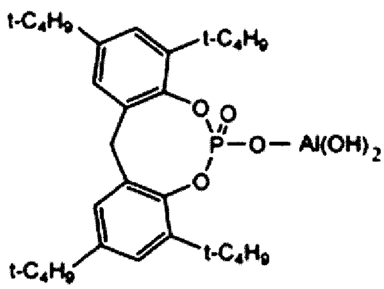

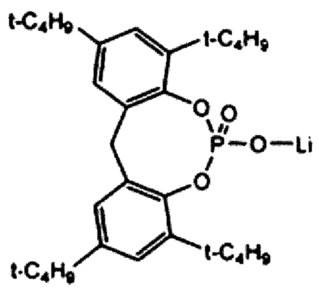

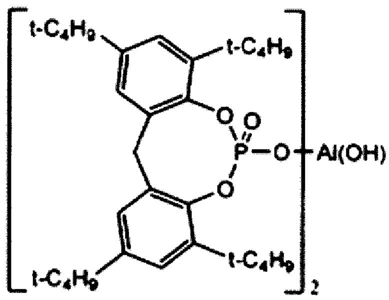

In general formula (2), examples of an alkyl group having 1 to 6 carbon atoms represented by $R^6$ to $R^{15}$ include alkyl groups that are the same as those exemplified as the alkyl group having 1 to 6 carbon atoms represented by $R^1$ to $R^5$.

From the viewpoint of imparting more excellent mechanical properties to molded articles, all of $R^6$ to $R^{15}$ are preferably hydrogen atoms. Moreover, from the same point of view, all of $R^7$ to $R^{12}$ and $R^{14}$ to $R^{15}$ are hydrogen atoms, and $R^6$ and $R^{13}$ are linked to each other to form preferably a methylene group, an ethanediyl group or a 2,2-propanediyl group.

When $M^2$ represents an alkali metal, examples of the alkali metal include lithium, sodium, and potassium. Of these, lithium and sodium are preferred, and sodium is particularly preferred. Moreover, when $M^2$ represents an alkaline earth metal, examples of the alkaline earth metal include magnesium, calcium, and barium. Of these, calcium is particularly preferred.

From the viewpoint of imparting even more excellent mechanical properties to molded articles, p is preferably 2.

Specific examples of the alicyclic dicarboxylic acid metal salt represented by general formula (2) include calcium cyclohexane-1,2-dicarboxylate, disodium cyclohexane-1,2-dicarboxylate, calcium bicyclo[2.2.1]heptane-2,3-dicarboxylate, and disodium bicyclo[2.2.1]heptane-2,3-dicarboxylate. One type thereof may be contained individually, or two or more types thereof may be contained in combination. However, the alicyclic dicarboxylic acid metal salt represented by general formula (2) is not limited to these examples.

In general formula (3), examples of the alkyl group having 1 to 6 carbon atoms represented by $R^{16}$ to $R^{20}$ include alkyl groups that are the same as those exemplified as the alkyl group having 1 to 6 carbon atoms represented by $R^1$ to $R^{15}$.

In general formula (3), examples of the alkylene group having 3 to 6 carbon atoms, which is formed by linking of $R^{17}$ and $R^{18}$ or $R^{19}$ and $R^{20}$ to each other, include a propylene group, a butylene group, a pentylene group and a hexylene group. Examples of the alkylenedioxy group having 1 to 4 carbon atoms, which is formed by linking of $R^{17}$ and $R^{18}$ or $R^{19}$ and $R^{20}$ to each other, include a methylenedioxy group, an ethylenedioxy group, a propylenedioxy group, and a butylenedioxy group.

In general formula (3), examples of the alkoxy group having 1 to 6 carbon atoms represented by $R^{17}$ to $R^{20}$ include a methoxy group, an ethoxy group, a propoxy group, an n-butyloxy group, an isobutyloxy group, a sec-butyloxy group, a tert-butyloxy group, a pentyloxy group, and a hexyloxy group.

In general formula (3), examples of the halogen atom represented by $R^{17}$ to $R^{20}$ include a fluorine atom, a chlorine atom, a bromine atom, and an iodine atom.

From the viewpoint of imparting more excellent mechanical properties to molded articles, $R^{16}$ to $R^{20}$ are preferably each independently a hydrogen atom or an alkyl group having 1 to 6 carbon atoms, and X is preferably a -CH(OH)- group.

Specific examples of the diacetal compound represented by general formula (3) include dibenzylidenesorbitol, bis(methylbenzylidene)sorbitol, bis(3,4-dimethylbenzylidene)sorbitol, bis(p-ethylbenzylidene)sorbitol, bis(dimethylbenzylidene)sorbitol, and 1,2,3-trideoxy-4,6:5,7-o-bis(4-propylbenzylidene)nonitol.

Examples of the β-crystal nucleating agent include carboxylic acid metal salts such as calcium pimelate, calcium 4-cyclohexene-1,2-dicarboxylate, an aspartic acid amide metal salt represented by the following general formula (4), quinacridone compounds such as γ-quinacridone, dihydroquinacridone and quinacridonequinone; and amide compounds such as N,N',N''-tris[2-methylcyclohexyl]-1,2,3-propane tricarboxamide, N,N'-dicyclohexyl-1,4-benzenedicarboxamide, N,N',N''-tricyclohexyl-1,3,5- benzenetricarboxamide, N,N'-dicyclohexyl-2,6-naphthalenedicarboxamide, and 1,3,5-tri(dimethylisopropylamino)benzene.

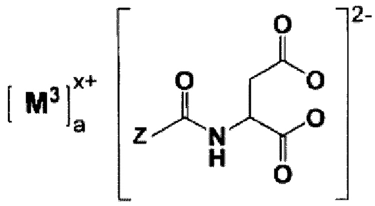

(4)

Here, in general formula (4), $M^3$ represents an alkali metal, an alkaline earth metal, hydroxyaluminum or dihydroxyaluminum, a represents 1 or 2, x represents 1 or 2, and satisfies ax = 2. Z represents a group having a structure represented by the following general formula (5) or (6).

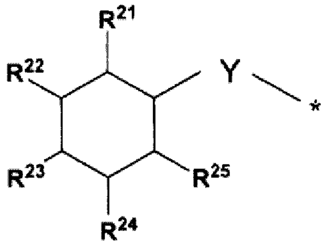

(5)

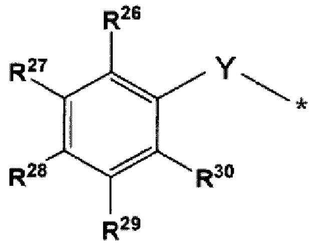

(6)

Here, in general formulas (5) and (6), Y represents a direct bond or an alkylene group having 1 to 4 carbon atoms, and $R^{21}$ to $R^{30}$ each independently represent a hydrogen atom, a halogen atom, or an alkyl group having 1 to 6 carbon atoms, and * represents the position of bonding to carbonyl carbon.

In general formula (4), examples of $M^3$ include lithium, sodium, potassium, magnesium, calcium, barium, hydroxyaluminum, and dihydroxyaluminum. From the viewpoint of imparting more excellent mechanical properties to molded articles, $M^3$ is preferably sodium, calcium, hydroxyaluminum or dihydroxyaluminum, preferably sodium or hydroxyaluminum, and particularly preferably sodium. Further, in general formula (4), x is preferably 1 and a is preferably 2.

Z in general formula (4) is preferably a group having a structure represented by general formula (6). In this case, even more excellent mechanical properties can be imparted to molded articles.

Examples of the alkylene group having 1 to 4 carbon atoms represented by Y in general formulas (5) and (6) include a methylene group, an ethylene group, a propylene group, a butylene group, and an isobutylene group. From the viewpoint of imparting more excellent mechanical properties to molded articles, Y is preferably a direct bond or a methylene group, and more preferably a direct bond.

Examples of the halogen atom represented by $R^{21}$ to $R^{30}$ in general formulas (5) and (6) include fluorine, chlorine, bromine, and iodine. Of these, from the viewpoint of imparting more excellent mechanical properties to molded articles, chlorine is particularly preferable.

Examples of the alkyl group having 1 to 6 carbon atoms represented by $R^{21}$ to $R^{30}$ in general formulas (5) and (6) include alkyl groups that are the same as those exemplified as the alkyl group having 1 to 6 carbon atoms represented by $R^1$ to $R^{20}$.

$R^{21}$ to $R^{30}$ in general formulas (5) and (6) are preferably hydrogen atoms or halogen atoms, and particularly preferably hydrogen atoms, from the viewpoint of imparting even more excellent mechanical properties to molded articles.

Specific examples of the aspartic acid amide metal salt represented by general formula (4) include the following. One type thereof may be contained individually, or two or more types thereof may be contained in combination. However, the aspartic acid amide metal salt represented by general formula (4) is not limited to these.

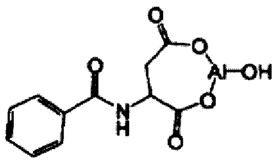 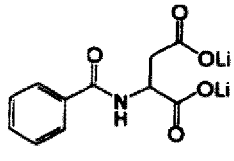 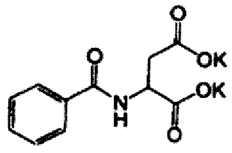

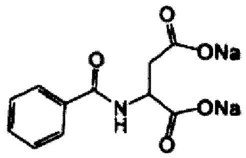 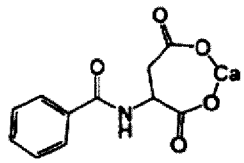

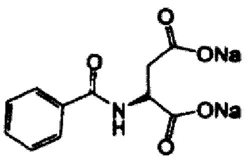 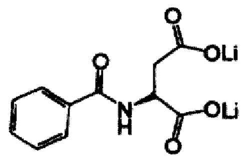 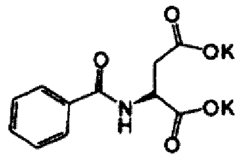 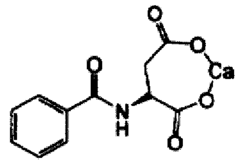

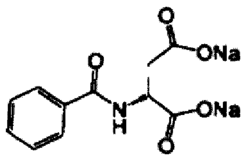 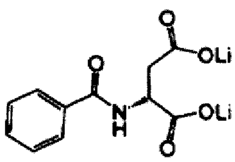 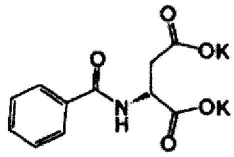 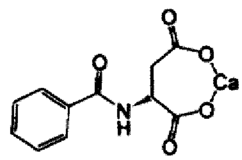

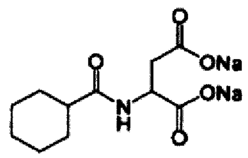 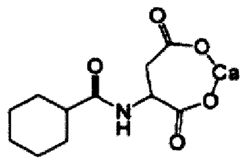 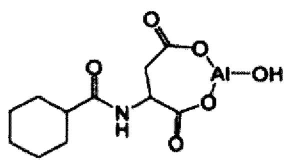

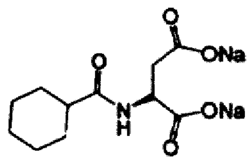 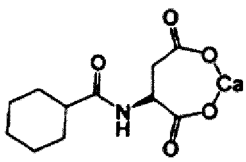 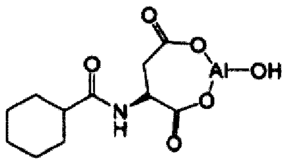

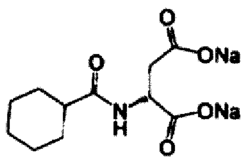 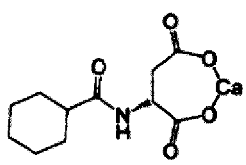 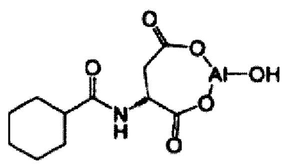

From the viewpoint of imparting more excellent rigidity to molded articles, the nucleating agent composition of the present embodiment preferably contains an $\alpha$-crystal nucleating agent that promotes $\alpha$ crystal formation by a polyolefin-based resin. From the same point of view, the nucleating agent composition of the present embodiment contains preferably at least one type selected from the group consisting of an aromatic phosphate metal salt represented by general formula (1), an alicyclic dicarboxylic acid metal salt represented by general formula (2), and an aromatic carboxylic acid metal salt as the $\alpha$-crystal nucleating agent, and more preferably at least one type selected from the group consisting of the aromatic phosphate metal salt represented by general formula (1) and the alicyclic dicarboxylic acid metal salt represented by general formula (2).

Further, from the viewpoint of imparting more excellent impact resistance to molded articles, the nucleating

agent composition of the present embodiment contains preferably a β-crystal nucleating agent that promotes β-crystal formation by a polyolefin-based resin. From the same point of view, the nucleating agent composition of the present embodiment contains preferably at least one type selected from the group consisting of a carboxylic acid metal salt and a quinacridone compound as a β-crystal nucleating agent, and more preferably a carboxylic acid metal salt.

From the viewpoint of imparting more excellent rigidity and impact resistance to molded articles, the nucleating agent composition of the present embodiment preferably contains an α-crystal nucleating agent that promotes the α crystal formation by a polyolefin-based resin and a β-crystal nucleating agent that promotes the β-crystal formation by a polyolefin-based resin. When the nucleating agent composition contains the α-crystal nucleating agent and the β-crystal nucleating agent, the content ratio of the α-crystal nucleating agent and the β-crystal nucleating agent may be, for example, α-crystal nucleating agent/β-crystal nucleating agent = 0.5/99.5 to 90/10, is preferably α-crystal nucleating agent/β-crystal nucleating agent = 1/99 to 50/50, and more preferably 1.5/98.5 to 40/60 in terms of mass ratio.

The nucleating agent for a polyolefin-based resin may be contained in the nucleating agent composition of the present embodiment in an amount ranging from, for example, 10% to 100% by mass, 50% to 100% by mass, or 80% to 100% by mass of the total nucleating agent composition.

From the viewpoint of imparting more excellent impact resistance to molded articles, the nucleating agent composition of the present embodiment preferably does not contain N,N'-dicyclohexyl-1,4-benzenedicarboxamide.

If necessary, the nucleating agent composition according to the present embodiment may further contain various additives such as a phenolic antioxidant, a phosphorus-based antioxidant, a sulfur-based antioxidant, other antioxidants, a hindered amine compound, an ultraviolet absorber, a fatty acid metal salt, a flame retardant, a flame-retardant aid, a lubricant, a filler, hydrotalcites, an antistatic agent, a fluorescent whitening agent, a pigment and a dye.

Examples of the phenolic antioxidant include 2,6-di-tert-butyl-4-ethylphenol, 2-tert-butyl-4,6-dimethylphenol, styrenated phenol, 2,2'-methylenebis(4-ethyl-6-tert-butylphenol), 2,2'-thiobis-(6-tert-butyl-4-methylphenol), 2,2'-thiodiethylenebis[3-(3,5-di-tert-butyl-4-hydroxyphenyl)propionate], 2-methyl-4,6-bis(octylsulfanylmethyl)phenol, 2,2'-isobutylidenebis(4,6-dimethylphenol), isooctyl-3-(3,5-di-tert-butyl-4-hydroxyphenyl)propionate, N,N'-hexane-1,6-diylbis[3-(3,5-di-tert-butyl-4-hydroxyphenyl)propionamide], 2,2'-oxamide-bis[ethyl-3-(3,5-di-tert-butyl-4-hydroxyphenyl)propionate], 2-ethylhexyl-3-(3',5'-di-tert-butyl-4'-hydroxyphenyl)propionate, 2,2'-ethylenebis(4,6-di-tert-butylphenol), esters of 3,5-di-tert-butyl-4-hydroxybenzenepropanoic acid and C13-15 alkyl, 2,5-di-tert-amylhydroquinone, hindered phenol polymer (manufactured by ADEKA POLYMER ADDITIVES EUROPE SAS, trade name "AO.OH.98"), 2,2'-methylenebis[6-(1-methylcyclohexyl)-p-cresol], 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, 6-[3-(3-tert-butyl-4-hydroxy-5-methyl)propoxy]-2,4,8,10-tetra-tert-butylbenzo[d,f][1,3,2]-dioxaphosphobin, hexamethylenebis[3-(3,5-di-tert-butyl-4-hydroxyphenyl)propionate], calcium bis[monoethyl(3,5-di-tert-butyl-4-hydroxybenzyl)phosphonate], a reaction product of 5,7-bis(1,1-dimethylethyl)-3-hydroxy-2(3H)-benzofuranone and o-xylene, 2,6-di-tert-butyl-4-(4,6-bis(octylthio)-1,3,5-triazine-2-ylamino)phenol, DL-α-tocophenol (vitamin E), 2,6-bis(α-methylbenzyl)-4-methylphenol, bis[3,3-bis-(4'-hydroxy-3'-tert-butyl-phenyl) butanoic acid]glycol ester, 2,6-di-tert-butyl-p-cresol, 2,6-diphenyl-4-octadecyloxyphenol, stearyl(3,5-di-tert-butyl-4-hydroxyphenyl)propionate, distearyl(3,5-di-tert-butyl-4-hydroxybenzyl)phosphonate, tridecyl-3,5-tert-butyl-4-hydroxybenzyl thioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6-tert-butylphenol), bis[3,3-bis(4-hydroxy-3-tert-butylphenyl)butyric acid]glycol ester, 4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-tert-butyl-4'-hydroxyphenyl)propionate]methane, 2-tert-butyl-4-methyl-6-(2-acryloyloxy-3-tert-butyl-5-methylbenzyl)phenol, 3,9-bis[2-(3-tert-butyl-4-hydroxy-5-methylhydrocinnamoyloxy)-1,1-dimethylethyl]-2,4,8,10-tetraoxaspiro[5.5]undecane, and triethylene glycolbis[β-(3-tert-butyl-4-hydroxy-5-methylphenyl)propionate], and 3-(3,5-dialkyl-4-hydroxyphenyl) propionic acid derivatives, such as stearyl-3-(3,5-di-tert-butyl-4-hydroxyphenyl)propionic acid amide, palmityl-3-(3,5-di-tert-butyl-4-hydroxyphenyl) propionic acid amide, myristyl-3-(3,5-di-tert-butyl-4-hydroxyphenyl) propionic acid amide, and lauryl-3-(3,5-di-tert-butyl-4-hydroxyphenyl) propionic acid amide.

Examples of the phosphorus-based antioxidant include triphenyl phosphite, diisooctyl phosphite, heptakis(dipropyleneglycol)triphosphite, triisodecyl phosphite, diphenylisooctyl phosphite, diisooctylphenyl phosphite, diphenyl tridecyl phosphite, triisooctyl phosphite, trilauryl phosphite, diphenyl phosphite, tris(dipropylene glycol) phosphite, dioleylhydrogen phosphite, trilauryltrithio phosphite, bis(tridecyl)phosphite, tris(isodecyl)phosphite, tris(tridecyl) phosphite, diphenyldecyl phosphite, dinonyl phenylbis(nonylphenyl) phosphite, poly(dipropyleneglycol)phenyl phosphite, tetraphenyldipropylglycol diphosphite, trisnonylphenyl phosphite, tris(2,4-di-tert-butylphenyl) phosphite, tris(2,4-di-tert-butyl-5-methylphenyl) phosphite, tris[2-tert-butyl-4-(3-tert-butyl-4-hydroxy-5-methylphenylthio)-5-methylphenyl]phosphite, tri(decyl) phosphite, octyl diphenyl phosphite, di(decyl)monophenyl phosphite, mixtures of distearylpentaerythritol and calcium

stearate, alkyl(C10) bisphenol A phosphite, tetraphenyl-tetra(tridecyl)pentaerythritol tetraphosphite, bis(2,4-di-tert-butyl-6-methylphenyl)ethyl phosphite, tetra(tridecyl)isopropylidene diphenol diphosphite, tetra(tridecyl)-4,4'-n-butylidenebis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, (1-methyl-1-propenyl-3-ylidene)tris(1,1-dimethylethyl)-5-methyl-4,1-phenylene)hexatridecyl phosphite, 2,2'-methylenebis(4,6-di-tert-butylphenyl)-2-ethylhexyl phosphite, 2,2'-methylenebis(4,6-di-tert-butylphenyl)-octadecyl phosphite, 2,2'-ethylidenebis(4,6-di-tert-butylphenyl)fluorophosphite, 4,4'-butylidenebis(3-methyl-6-tert-butylphenylditridecyl) phosphite, tris(2-[(2,4,8,10-tetrakis-tert-butyldibenzo[d,f][1,3,2]dioxaphosphepin-6-yl)oxy]ethyl)amine, 3,9-bis(4-nonylphenoxy)-2,4,8,10-tetraoxa-3,9-diphospaspiro[5,5]undecane, 2,4,6-tri-tert-butylphenyl-2-butyl-2-ethyl-1,3-propanediol phosphite, poly-4,4'-isopropylidene diphenol C12-15 alcohol phosphite, bis(diisodecyl)pentaerythritol diphosphite, bis(tridecyl)pentaerythritol diphosphite, bis(octadecyl) pentaerythritol diphosphite, bis(nonylphenyl) pentaerythritol diphosphite, bis(2,4-di-tert-butylphenyl)pentaerythritol diphosphite, bis(2,4,6-tri-tert-butylphenyl)pentaerythritol diphosphite, bis(2,6-di-tert-butyl-4-methylphenyl)pentaerythritol diphosphite, and bis(2,4-dicumylphenyl)pentaerythritol diphosphite.

Examples of the sulfur-based antioxidant include tetrakis[methylene-3-(laurylthio)propionate]methane, bis(methyl-4-[3-n-alkyl(C12/C14)thiopropionyloxy]5-tert-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-tert-butyl-m-cresol), 2,2'-thiobis(6-tert-butyl-p-cresol), and distearyl-disulfide.

Other antioxidants include: nitrone compounds such as N-benzyl-α-phenyl nitrone, N-ethyl-α-methyl nitrone, N-octyl-α-heptyl nitrone, N-lauryl-α-undecyl nitrone, N-tetradecyl-α-tridecyl nitrone, N-hexadecyl-α-pentadecyl nitrone, N-octyl-α-heptadecyl nitrone, N-hexadecyl-α-heptadecyl nitrone, N-octadecyl-α-pentadecyl nitrone, N-heptadecyl-α-heptadecyl nitrone, and N-octadecyl-α-heptadecyl nitrone; and benzofuran compounds such as 3-arylbenzofuran-2(3H)-one, 3-(alkoxyphenyl)benzofuran-2-one, 3-(acyloxyphenyl)benzofuran-2(3H)-one, 5,7-di-tert-butyl-3-(3,4-dimethylphenyl)-benzofuran-2(3H)-one, 5,7-di-tert-butyl-3-(4-hydroxyphenyl)-benzofuran-2(3H)-one, 5,7-di-tert-butyl-3-{4-(2-hydroxyethoxy)phenyl }-benzofuran-2(3H)-one, 6-(2-(4-(5,7-di-tert-2-oxo-2,3-dihydrobenzofuran-3-yl)phenoxy)ethoxy)-6-oxohexyl-6-((6-hydroxyhexanoyl)oxy)hexanoate, and 5-di-tert-butyl-3-(4-((15-hydroxy-3,6,9,13-tetraoxapentadecyl)oxy)phenyl)benzofuran-2(3H)one.

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-di(tridecyl)-1,2,3,4-butanetetracarboxylate, bis(1,2,2,6,6-pentamethyl-4-piperidyl)-di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-ylamino]undecane, 1,6,11-tris[2,4-bis(N-butyl-N-(1,2,2,6,6-pentamethyl-4-piperidyl)amino)-s-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidin-4-yl)carbonate, 2,2,6,6-tetramethyl-4-piperidyl hexadecanoate, and 2,2,6,6-tetramethyl-4-piperidyl octadecanoate.

Examples of the UV absorber include: 2-hydroxybenzophenones such as 2,4-dihydroxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolyl phenol), polyethylene glycol esters of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-(2-hydroxy-4-(3-methacryloyloxypropyl)phenyl]benzotriazole; benzoates such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate, and behenyl(3,5-di-tert-butyl-4-hydroxy)benzoate; substituted oxanilides such as 2-ethyl-2'-ethoxyoxanilide, and 2-ethoxy-4'-dodecyloxanilide; cyanoacrylates such as ethyl-$\alpha$-cyano-$\beta$,$\beta$-diphenyl acrylate, and methyl-2-cyano-3-methyl-3-(p-methoxyphenyl) acrylate; triazines such as 2-(4,6-diphenyl-1,3,5-triazine-2-yl)-5-hexyloxyphenol, 2-(2-hydroxy-4-octoxyphenyl)-4,6-bis(2,4-dimethylphenyl)-1,3,5-triazine, trioctyl-2,2',2"-((1,3,5-triazine-2,4,6-triyl)tris(3-hydroxybenzene-4-,1-diyl)tripropionate), 2-(4,6-diphenyl-1,3,5-triazine-2-yl)-5-[2-(2-ethylhexanoyloxy)ethoxy]phenol, 2,4,6-tris(2-hydroxy-4-hexyloxy-3-methylphenyl)-1,3,5-triazine, and 1,12-bis[2-[4-(4,6-diphenyl-1,3,5-triazine-2-yl)-3-hydroxyphenoxy]ethyl]dodecanedioate; and various metal salts or metal chelates, particularly salts or chelates of nickel and chromium.

Examples of the fatty acid metal salt include a fatty acid metal salt having 12 to 20 carbon atoms, which contains linear or branched fatty acid residues. Examples of metal ions constituting such fatty acid metal salts include sodium ions, potassium ions, lithium ions, dihydroxyaluminum ions, calcium ions, zinc ions, barium ions, magnesium ions, and hydroxyaluminum ions. Of these, sodium ions, potassium ions, lithium ions, and calcium ions are particularly preferred.

Specific examples of the fatty acid metal salt include sodium laurate, sodium myristate, sodium palmitate, sodium stearate, sodium oleate, sodium linoleate, sodium linolenate, sodium arachidate, sodium 12-hydroxystearate, potassium laurate, potassium myristate, potassium palmitate, potassium stearate, potassium oleate, potassium linoleate, potassium linolenate, potassium arachidate, potassium 12-hydroxystearate, lithium laurate, lithium myristate, lithium palmitate, lithium stearate, lithium oleate, lithium linoleate, lithium linolenate, lithium arachidate, lithium 12-hydroxystearate, calcium laurate, calcium myristate, calcium palmitate, calcium stearate, calcium oleate, calcium linoleate, calcium linolenate, calcium arachidate, and calcium 12-hydroxystearate. Of these, sodium myristate, sodium stearate, sodium 12-hydroxystearate, lithium myristate, lithium stearate, lithium 12-hydroxystearate, calcium myristate, calcium stearate and calcium 12-hydroxystearate are preferred, lithium myristate, lithium stearate, lithium 12-hydroxystearate, calcium myristate, calcium stearate and calcium 12-hydroxystearate are more preferred, and lithium myristate, lithium stearate, and lithium 12-hydroxystearate are more preferred.

Examples of the flame retardant include: aromatic phosphates such as triphenyl phosphate, tricresyl phosphate, trixylenyl phosphate, cresyl diphenyl phosphate, cresyl-2,6-dixylenyl phosphate, resorcinol bis(diphenyl phosphate), (1-methylethylidene)-4,1-phenylene tetraphenyl diphosphate, 1,3-phenylene tetrakis(2,6-dimethylphenyl)phosphate, and "ADEKA STAB FP-500, ADEKA STAB FP-600, and ADEKA STAB FP-800 (trade names)" manufactured by ADEKA Corporation; phosphonates such as divinyl phenylphosphonate, diallyl phenylphosphonate, and (1-butenyl)phenylphosphonate; phosphinates such as phenyl diphenylphosphinate, methyl diphenylphosphinate, and 9,10-dihydro-9-oxa-10-phosphaphenanthrene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds and red phosphorus; metal hydroxides such as magnesium hydroxide and aluminum hydroxide; and bromine-based flame retardants, such as brominated bisphenol A-type epoxy resin, brominated phenol novolac type epoxy resin, hexabromobenzene, pentabromotoluene, ethylenebis(pentabromophenyl), ethylenebistetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene and 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate, and brominated styrene. These flame retardants are preferably used in combination with anti-drip agents such as fluororesins, or flame-retardant aids such as polyhydric alcohols and hydrotalcites.

Examples of the lubricant include: unsaturated fatty acid amides such as oleic acid amide and erucic acid amide; saturated fatty acid amides such as behenic acid amide and stearic acid amide; and butyl stearate, stearyl alcohol, stearic acid monoglyceride, sorbitan monopalmititate, sorbitan monostearate, mannitol, stearic acid, hydrogenated castor oil, stearic acid amide, oleic acid amide, and ethylene bis stearic acid amide.

Examples of the filler can include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, silica, alumina, potassium titanate whiskers, wollastonite, and fibrous magnesium oxysulfate. Such a filler can be used by appropriately selecting the particle size (in a fibrous form, fiber diameter, fiber length, and aspect ratio). Of these fillers, talc is particularly preferably used because it is excellent in the effect of imparting rigidity and is easily available. In addition, the filler that can be used herein may be subjected to surface treatment as necessary.

Hydrotalcites are complex salt compounds that are known as natural or synthetic products composed of magnesium, aluminum, hydroxy group, carbonate group, and arbitrary water of crystallization. Examples thereof include those in which magnesium or aluminum is partially substituted with another metal such as an alkali metal, zinc, or the like, and those in which a hydroxy group or a carbonate group is substituted with another anionic group. Hydrotalcites may be those obtained by dehydrating water of crystallization, and those coated with higher fatty acids such as stearic acid, higher fatty acid metal salts such as an oleic acid alkali metal salt, organic sulfonic acid metal salts such as a

dodecylbenzene sulfonic acid alkali metal salt, higher fatty acid amide, higher fatty acid ester, wax, or the like. Hydrotalcites may be natural products or synthetic products. Examples of methods for synthesizing hydrotalcites include known methods described in Japanese Patent Publication No. S46-2280, Japanese Patent Publication No. S50-30039, Japanese Patent Publication No. S51-29129, Japanese Patent Publication No. H3-36839, JP S61-174270A, JP H5-179052A, and the like. In addition, hydrotalcites can be used without being limited by their crystal structures, crystal grains, and the like.

Examples of the antistatic agent include low-molecular-weight antistatic agents based on nonionic, anionic, cationic or amphoteric surfactants, and high-molecular-weight antistatic agents based on polymer compounds. Examples of the nonionic surfactant include: polyethylene glycol type nonionic surfactants such as a higher alcohol ethylene oxide adduct, a fatty acid ethylene oxide adduct, a higher alkylamine ethylene oxide adduct, and a polyolefin glycol ethylene oxide adduct; and polyhydric alcohol-type nonionic surfactants such as a polyethylene oxide, a glycerin fatty acid ester, a pentaerythrityl fatty acid ester, a sorbit or sorbitan fatty acid ester, a polyhydric alcohol alkyl ether, and an alkanolamine aliphatic amide. Examples of the anionic surfactant include: carboxylates such as an alkali metal salt of higher fatty acid; sulfates such as a higher alcohol sulfate and a higher alkyl ether sulfate; sulfonates such as alkylbenezene sulfonate, alkyl sulfonate, and paraffin sulfonate; and phosphates such as higher alcohol phosphate. Examples of the cationic surfactant include quaternary ammonium salts such as an alkyltrimethylammonium salt. Examples of the amphoteric surfactant include amino acid-type amphoteric surfactants such as higher alkyl aminopropionate; and betaine-type amphoteric surfactants such as higher alkyldimethylbetaine and higher alkyldihydroxyethylbetaine. Of these, anionic surfactants are preferred, and sulfonates such as an alkylbenzenesulfonate, an alkylsulfonate and a paraffin sulfonate are particularly preferred.

Examples of the high-molecular-weight antistatic agent include block polymers containing an ionomer or polyethylene glycol as the hydrophilic moiety. Examples of the ionomer include the ionomer described in JP 2010-132927A. Examples of the polymer containing polyethylene glycol as the hydrophilic moiety include polyether ester amide described in JP H7-10989A, a polymer composed of polyolefin and polyethylene glycol described in US Patent No. 6,552,131, and a polymer composed of polyester and polyethylene glycol described in JP 2016-023254A.

A fluorescent brightener is a compound that enhances the whiteness and blueness of a molded article through the fluorescent action of absorbing ultraviolet rays of sunlight or artificial light, and then converting them into purple to blue visible rays for radiation. Examples of the fluorescent brightener include a benzoxazole-based compound, C. I. Fluorescent Brightener 184; coumarin-based compound, C I. Fluorescent Brightener 52; a diamino stilbene disulfonic acid-based compound, such as C. I. Fluorescent Brighteners 24, 85, and 71.

The pigment is not particularly limited, and commercially available pigments can also be used. Specific examples of the pigment include Pigment Red 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; Pigment Orange 13, 31, 34, 36, 38, 43, 46, 48, 49, 51, 52, 55, 59, 60, 61, 62, 64, 65, and 71; Pigment Yellow 1, 3 , 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180 and 185; Pigment Green 7,10, and 36; Pigment Blue: 15, 15:1, 15:2, 15:3, 15:4, 15:5, 15:6, 22, 24, 29, 56, 60, 61, 62, and 64; and Pigment Violet 1, 15, 19, 23, 27, 29, 30, 32, 37, 40, and 50.

Examples of the dye include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes, and cyanine dyes.

The nucleating agent composition according to the present embodiment may be a one-pack composite additive that is further blended with a granulation aid such as a binder, wax, a solvent, and silica for granulation. Further, the nucleating agent composition according to the present embodiment may be a masterbatch further containing a polyolefin-based resin.

Examples of the polyolefin-based resin contained in the masterbatch include: polyethylene-based resins such as low-density polyethylene, linear low-density polyethylene, high-density polyethylene, cross-linked polyethylene, and ultra-high molecular weight polyethylene; polypropylene-based resins such as homopolypropylene, random copolymer polypropylene, block copolymer polypropylene, impact copolymer polypropylene, high-impact copolymer polypropylene, and maleic anhydride-modified polypropylene; $\alpha$-olefin polymers such as polybutene-1, cycloolefin polymer, poly-3-methyl-1-butene, poly-3-methyl-1-pentene, and poly-4-methyl-1-pentene; and $\alpha$-olefin copolymers such as ethylene-methyl methacrylate copolymer and ethylene-vinyl acetate copolymer. One type of these polyolefin-based resins may be used singly or two or more types thereof may be used in combination. Moreover, these polyolefin-based resins may be alloyed. The molecular weight, the degree of polymerization, the density, the softening point, the insoluble component-to-solvent ratio, the degree of stereoregularity, the presence or absence of a catalyst residue, the type and the blend ratio of each raw-material monomer, catalyst types to be used for polymerization (for example, Ziegler catalyst, metallocene catalyst, etc.) of the polyolefin-based resin are not particularly limited and can be selected as appropriate.

Such a polyolefin-based resin to be contained in the masterbatch is particularly preferably a polypropylene-based resin.

When the nucleating agent composition is a masterbatch containing a polyolefin-based resin, the content of the polyolefin-based resin in the masterbatch may be, for example, 90% by mass or less, preferably 80% by mass or less, and more preferably 60% by mass or less. Moreover, the content of the polyolefin-based resin in the masterbatch may be, for example, 20% by mass or more.

Next, the resin composition according to the present embodiment will be described.

<Resin composition>

The resin composition of the present embodiment contains a polyolefin-based resin and at least one type of a nucleating agent for a polyolefin-based resin, wherein a β crystal fraction ranges from 0.2% to 71% as calculated by the following method.

<Method for calculating β crystal fraction>

(1) After the resin composition is dried at 80°C for 8 hours, 10 mg of a sample is sampled from the dried pellets, and then the sample is introduced into a differential scanning calorimeter.

(2) Using the differential scanning calorimeter, differential scanning calorimetry is performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, $Q = f(\theta)$, with the horizontal axis being temperature $\theta$ (°C) and the vertical axis being heat flow rate Q(mW). Here, regarding the vertical axis, the endothermic direction is assumed to be positive.

(3) In a portion of the DSC curve, which corresponds to the second temperature rising process in the temperature program above, a baseline $g(\theta) = (f(200) - f(110))/90 \times (\theta - 110) + f(110)$ is subtracted from $f(\theta)$ to obtain a baseline-corrected DSC curve, $Q' = h(\theta) = f(\theta) - g(\theta)$.

(4) The area of a region surrounded by the portion of $110 \leq \theta \leq 200$ of the curve $Q' = h(\theta)$ and line segment AB connecting point A (110, 0) and point B (200, 0) is determined to be St. Here, St is represented by the following formula.

$$S_t = \int_{110}^{200} h(\theta)\, d\theta$$

(5) Two maximum points in the range of $110 \leq \theta \leq 200$ on the curve $Q' = h(\theta)$ are determined to be $R(\theta_\beta, h(\theta_\beta))$ and $S(\theta_\alpha, h(\theta_\alpha))$ (where $\theta_\beta < \theta_\alpha$), and the minimum point in the range of $\theta_\beta < \theta < \theta_\alpha$ on the curve $Q' = h(\theta)$ is determined to be $C(\theta\gamma, h(\theta_\gamma))$. Then a tangent is drawn to pass through point C and come into contact with the curve $Q' = h(\theta)$ in the range of $110 < \theta < \theta_\beta$, determining the contact point as point D $(\theta_\delta, h(\theta_\delta))$. Then, the area of a region surrounded by the portion of $\theta_\delta \leq \theta \leq \theta_\gamma$ of the curve $Q' = h(\theta)$ and line segment DC connecting point D and point C is determined to be $S_\beta$.

Here, $S_\beta$ is represented by the following formula,

$$S_\beta = \int_{\theta_\delta}^{\theta_\gamma} j(\theta)\, d\theta$$

wherein $j(\theta) = h(\theta) - i(\theta)$ and $i(\theta) = (h(\theta\gamma) - h(\theta_\delta))/(\theta_\gamma - \theta_\delta) \times (\theta - \theta_\gamma) + h(\theta_\gamma)$.

(6) A β crystal fraction (%) is calculated from the above $S_t$ and $S_\beta$ by the following formula.

$$\beta \text{ crystal fraction} = S_\beta/S_t \times 100(\%)$$

As described above, the β crystal fraction (%) refers to the proportion of area $S_\beta$ of the region surrounded by

the curve Q' and line segment CD with respect to area St of the region surrounded by the curve Q' and line segment AB in the range of 110°C to 200°C (see FIG. 2).

According to the resin composition of the present embodiment, excellent mechanical properties can be imparted to molded articles containing a polyolefin-based resin.

As described above, the β crystal fraction of the resin composition of the present embodiment ranges from 0.2% to 71%. From the viewpoint of imparting excellent mechanical properties to molded articles, the β crystal fraction of the resin composition of the embodiment ranges from preferably 0.3% to 70.0%, and more preferably 3.0% to 45.0%, further preferably 5.0% to 30.0%, and even more preferably 10.0% to 25.0%.

Examples of a polyolefin-based resin contained in the resin composition according to the present embodiment include the same as those exemplified as the polyolefin-based resin contained in the above-described masterbatch. Of these, a polypropylene-based resin is preferable as the polyolefin resin contained in the resin composition. In this case, a molded article obtained by molding the resin composition has excellent mechanical properties and excellent heat resistance.

Further, examples of the nucleating agent for a polyolefin-based resin contained in the resin composition according to the present embodiment include the same as those exemplified as the nucleating agent for a polyolefin-based resin contained in the nucleating agent composition described above.

From the viewpoint of imparting more excellent impact resistance to molded articles, the resin composition of the present embodiment preferably does not contain N,N'-dicyclohexyl-1,4-benzenedicarboxamide.

The content of the nucleating agent for a polyolefin-based resin with respect to 100 parts by mass of a polyolefin-based resin is not particularly limited, and may range from, for example, 0.001 to 10 parts by mass. From the viewpoint of improving the mechanical properties of the molded article obtained by molding the resin composition and from the viewpoint of sufficiently suppressing the generation of bloom from the molded article and the migration of the nucleating agent for a polyolefin-based resin, the content of the one for a polyolefin-based resin with respect to 100 parts by mass of the polyolefin-based resin ranges from preferably 0.01 to 1 part by mass, and more preferably 0.02 to 0.2 parts by mass.

If necessary, the resin composition according to the present embodiment may further contain various additives such as a phenolic antioxidant, a phosphorus-based antioxidant, a sulfur-based antioxidant, other antioxidants, a hindered amine compound, an ultraviolet absorber, a fatty acid metal salt, a flame retardant, a flame-retardant aid, a lubricant, a filler, hydrotalcites, an antistatic agent, a fluorescent brightener, a pigment, and a dye. Examples of these various additives include the same as those exemplified as various additives that may be contained in the nucleating agent composition described above.

Next, a method for manufacturing the resin composition according to the present embodiment will be described.

<Method for manufacturing resin composition>

The method for manufacturing the resin composition of the present embodiment involves a blending step of blending at least one type of a nucleating agent for a polyolefin-based resin into a polyolefin-based resin in such a manner that a β crystal fraction ranges from 0.2% to 71% as calculated by the following method. From the viewpoint of imparting more excellent mechanical properties to the molded article, blending is preferably performed in such a manner that the β crystal fraction ranges from preferably 0.3% to 70.0%, more preferably 3.0% to 45.0%, further preferably 5.0% to 30.0%, and even more preferably 10.0% to 25.0%.

<Method for calculating β crystal fraction>

(1) After the resin composition is dried at 80°C for 8 hours, 10 mg of a sample is sampled from the dried pellets, and then the sample is introduced into a differential scanning calorimeter.

(2) Using the differential scanning calorimeter, differential scanning calorimetry is performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, $Q = f(\theta)$, with the horizontal axis being temperature θ (°C) and the vertical axis being heat flow rate Q(mW). Here, regarding the vertical axis, the endothermic direction is assumed to be positive.

(3) In a portion of the DSC curve, which corresponds to the second temperature rising process in the temperature program, a baseline $g(\theta) = (f(200) - f(110))/90 \times (\theta - 110) + f(110)$ is subtracted from $f(\theta)$ to obtain a baseline-corrected DSC curve, $Q' = h(\theta) = f(\theta) - g(\theta)$.

(4) The area of a region surrounded by the portion of $110 \leq \theta \leq 200$ of the curve $Q' = h(\theta)$ and line segment AB connecting point A (110, 0) and point B (200, 0) is determined to be St. Here, St is represented by the following formula.

$$S_t = \int_{110}^{200} h(\theta)\, d\theta$$

(5) Two maximum points in the range of $110 \leq \theta \leq 200$ on the curve Q' = h(θ) are determined to be $R(\theta_\beta, h(\theta_\beta))$ and $S(\theta_\alpha, h(\theta_\alpha))$ (where $\theta_\beta < \theta_\alpha$), and the minimum point in the range of $\theta_\beta < \theta < \theta_\alpha$ on the curve Q' = h(θ) is determined to be $C(\theta\gamma, h(\theta_\gamma))$. Then a tangent is drawn to pass through point C and come into contact with the curve Q' = h(θ) in the range of $110 < \theta < \theta_\beta$, determining the contact point as point D $(\theta_\delta, h(\theta_\delta))$. Then, the area of a region surrounded by the portion of $\theta_\delta \leq \theta \leq \theta_\gamma$ of the curve Q' = h(θ) and line segment DC connecting point D and point C is determined to be $S_\beta$.

Here, $S_\beta$ is represented by the following formula,

$$S_\beta = \int_{\theta_\delta}^{\theta_\gamma} j(\theta)\, d\theta$$

wherein $j(\theta) = h(\theta) - i(\theta)$ and $i(\theta) = (h(\theta\gamma) - h(\theta_\delta))/(\theta_\gamma - \theta_\delta) \times (\theta - \theta_\gamma) + h(\theta_\gamma)$.

(6) A β crystal fraction (%) is calculated from $S_t$ and $S_\beta$ by the following formula.

$$\beta \text{ crystal fraction} = S_\beta / S_t \times 100(\%)$$

As described above, the β crystal fraction (%) refers to the proportion of area $S_\beta$ of the region surrounded by the curve Q' and line segment CD with respect to area St of the region surrounded by the curve Q' and line segment AB in the range of 110°C to 200°C (see FIG. 2).

According to the method for manufacturing the resin composition of the present embodiment, a resin composition capable of imparting excellent mechanical properties to molded articles containing a polyolefin-based resin can be manufactured.

(Preparation step)

In the manufacture method according to the present embodiment, first, the above-described polyolefin-based resin and the above-described nucleating agent composition are prepared.

(Blending step)

Next, the nucleating agent composition is blended with a polyolefin-based resin. The blending method is not particularly limited. Examples of the method include a method that involves adding the polyolefin-based resin, the nucleating agent composition, and, if necessary, various additives described above, and then mixing the resultant with a mixer such as an FM mixer, a mill roll, a Banbury mixer, or a super mixer. Here, at least one component among the constituent components of the nucleating agent composition and the various additives described above is added before or during polymerization of polyolefin-based resin monomers or oligomers, and the remaining components may also be added to the resulting polymer.

The resin composition is manufactured as described above. The resin composition may also be manufactured by a method that involves a step of blending each nucleating agent for a polyolefin-based resin contained in the nucleating agent composition described above with a polyolefin-based resin. Further, the method for manufacturing a resin composition may also be a method that involves a melt-kneading step of melt-kneading the mixture obtained by the above method using a melt-kneading device such as a single-screw extruder or a twin-screw extruder. Here, the melt-kneading temperature may range from, for example, 160°C to 260°C. Moreover, the method for manufacturing a resin composition may be a method that involves a granulation step of granulating the kneaded product obtained by melt-kneading. Here, the granulation method is not particularly limited, and examples thereof include a method using a granulation apparatus such as a pelletizer. The shape of the resin composition obtained by granulation is not particularly limited as long as it is in the form of pellets, for example.

Next, the molded article according to the present embodiment will be described.

<Molded article >

A molded article according to the present embodiment is obtained by molding the resin composition described above. This molded article will have excellent mechanical properties.

Examples of the molded article according to the present embodiment include injection-molded articles, fibers, flat yarns, biaxially stretched films, uniaxially stretched films, unstretched films, sheets, thermoformed articles, extrusion blow molded articles, injection blow molded articles, injection stretch blow-molded articles, profile extrusion-molded articles, and rotationally molded articles, and more specifically, automobile exterior parts, automobile interior parts, housings, containers, and pipes. Examples of the automotive exterior parts include bumpers, radiator grilles, front grilles, front panels, fenders, pillars, pillar covers, door mirror stay covers, glass run channels, door mirror housings, lamp housings, wheel covers, spoilers, air spoilers, weather strips, window moldings, belt moldings, sunroofs, front-end modules, door modules, back door modules, and outside plates. Examples of the automotive interior parts include instrument panels, door trim panels, pillar trims, door trims, pillar garnishes, package trays, rear trays, console boxes, and air conditioning ducts. Examples of the housings include housings for home electric appliances, housings for arcade gaming machines, housings for home-use gaming machines, housings for portable gaming machines, housings for cameras, mobile phone housings, smartphone housings, electronic device housings, secondary battery housings, and safety breaker housings. Examples of the container include: tableware; food containers such as side dish containers, frozen food containers, microwave heat-resistant containers, freezer storage containers, retort containers, cups, and frozen dessert cups; bottle containers such as beverage bottles, infusion bottles, and medical hollow bottles; physicochemical test containers, such as beakers, and graduated cylinders; and chemical containers; medical containers, detergent containers, cosmetic containers, and perfume containers, and toner containers. Examples of the pipes include: various pipes such as tap water pipes, gas pipes, pipes for infrastructures, pipes for factory utilities, fuel delivery pipes for vehicles, and air intake pipes for vehicles; various tubes such as tubes for spraying cosmetics/perfume, tubes for medical use, and tubes for infusion solutions; and various hoses such as water hoses, and air duct hoses for vehicles.

The method for molding a molded article according to the present embodiment is not particularly limited, and examples thereof include an injection molding method, an extrusion molding method, a blow molding method, a rotational molding method, a vacuum molding method, an inflation molding method, a calendar molding method, a slush molding method, a dip molding method, and a thermoform molding method.

EXAMPLES

The present invention will be described in more detail below using Examples, but the present invention is not limited to these.

<Preparation of nucleating agent composition>

The following nucleating agents for polyolefin-based resins were blended at the blending ratios shown in Tables 1 to 4, and then mixed at 40°C for 20 minutes using an FM mixer (model FM-20, manufactured by NIPPON COKE & ENGINEERING. CO., LTD.) to obtain nucleating agent compositions. Note that in Tables 1 to 4, the unit of the blending ratio of each nucleating agent is % by mass.

Nucleating agent-1: sodium 2,2'-methylenebis(4,6-di-tert-butylphenyl)phosphate
Nucleating agent-2: calcium cyclohexane-1,2-dicarboxylate
Nucleating agent-3: sodium benzoate
Nucleating agent-4: calcium pimelate
Nucleating agent-5: calcium 4-cyclohexene-1,2-dicarboxylate
Nucleating agent-6: γ-quinacridone
Nucleating agent-7: disodium N-benzoyl-L-aspartate

[Table 1]

| | Nucleating agent composition-1 | Nucleating agent composition-2 | Nucleating agent composition-3 | Nucleating agent composition-4 |
|---|---|---|---|---|
| Nucleating agent-1 | 4.8 | - | 40.0 | - |
| Nucleating agent-2 | - | 4.8 | - | 21.7 |
| Nucleating agent-4 | 95.2 | 95.2 | - | - |
| Nucleating agent-5 | - | - | 60.0 | 78.3 |
| β crystal fraction (%) | 28.4 | 12.5 | 27.5 | 6.4 |

[Table 2]

| | Nucleating agent composition-5 | Nucleating agent composition-6 | Nucleating agent composition-7 | Nucleating agent composition-8 | Nucleating agent composition-9 | Nucleating agent composition-l0 |
|---|---|---|---|---|---|---|
| Nucleating agent-1 | 7.7 | 1.6 | - | - | - | - |
| Nucleating agent-2 | - | - | 9.1 | 1.6 | 16.7 | - |
| Nucleating agent-3 | - | - | - | - | - | 80 |
| Nucleating agent-6 | 92.3 | 98.4 | 90.9 | 98.4 | - | - |
| Nucleating agent-7 | - | - | - | - | 83.3 | 20 |
| β crystal fraction (%) | 0.3 | 62.7 | 0.2 | 2.7 | 4.5 | 70.9 |

[Table 3]

| | Nucleating agent composition-11 | Nucleating agent composition-12 | Nucleating agent composition-13 | Nucleating agent composition-14 | Nucleating agent composition-15 | Nucleating agent composition-16 | Nucleating agent composition-17 | Nucleating agent composition-18 |
|---|---|---|---|---|---|---|---|---|
| Nucleating agent-1 | 83.3 | - | 94.3 | - | 62.5 | - | - | - |
| Nucleating agent-2 | - | 85.7 | - | 95.2 | - | 50.0 | 92.3 | - |
| Nucleating agent-3 | - | - | - | - | - | - | - | - |
| Nucleating agent-4 | 16.7 | 14.3 | - | - | - | - | - | - |
| Nucleating agent-5 | - | - | 5.7 | 4.8 | - | - | - | - |
| Nucleating agent-6 | - | - | - | - | 37.5 | 50.0 | - | - |
| Nucleating agent-7 | - | - | - | - | - | - | 7.7 | 100 |
| β crystal fraction (%) | 0 | 0 | 0 | 0 | 0 | 0 | 0 | 73 |

[Table 4]

| | Nucleating agent composition-19 | Nucleating agent composition-20 | Nucleating agent composition-21 | Nucleating agent composition-22 |
|---|---|---|---|---|
| Nucleating agent-1 | 25.0 | 7.7 | - | - |
| Nucleating agent-2 | - | - | 16.7 | 85.7 |
| Nucleating agent-3 | - | - | - | - |
| Nucleating agent-4 | - | - | - | 14.3 |
| Nucleating agent-5 | 75.0 | - | - | - |
| Nucleating agent-6 | - | 92.3 | - | - |
| Nucleating agent-7 | - | - | 83.3 | - |
| β crystal fraction (%) | 66.3 | 45.4 | 33.1 | 0.04 |

<Calculation of β crystal fraction>

Regarding the nucleating agent compositions obtained as described above, the β crystal fractions were calculated by the following method.

(1) 100 parts by mass of homopolypropylene having a melt flow rate of 8 g/10 minutes in accordance with JIS K 7210 as measured under conditions of a temperature of 230°C and a load of 2.16 kg, 0.10 parts by mass of a nucleating agent composition, and 0.05 parts by mass of tetrakis[methylene-3-(3',5'-tert-butyl-4'-hydroxyphenyl)propionate]methane, 0.1 parts by mass of tris(2,4-di-tert-butylphenyl)phosphite) and 0.05 parts by mass of calcium stearate were blended and then mixed at 40°C for 1 minute using an FM mixer (model FM-20, manufactured by NIPPON COKE & ENGINEERING. CO., LTD.) to obtain a resin blend.
(2) The resin blend was melt-kneaded at a melting temperature of 230°C using a twin-screw extruder (Labo Plastomill Micro manufactured by Toyo Seiki Seisaku-sho, Ltd.), and the resulting melt-kneaded product was granulated to obtain pellets.
(3) After the pellets were dried at 80°C for 8 hours, 10 mg of a sample was sampled from the dried pellets and then introduced into a differential scanning calorimeter (Diamond, manufactured by PerkinElmer Co., Ltd.).
(4) Using the differential scanning calorimeter, differential scanning calorimetry was performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, $Q = f(\theta)$, with the horizontal axis being temperature $\theta$(°C) and the vertical axis being heat flow rate Q(mW). Here, regarding the vertical axis, the endothermic direction was assumed to be positive.
(5) In a portion of the DSC curve, which corresponds to the second temperature rising process in the above temperature program, a baseline $g(\theta) = (f(200) - f(110))/90 \times (\theta - 110) + f(110)$ was subtracted from $f(\theta)$ to obtain a baseline-corrected DSC curve, $Q' = h(\theta) = f(\theta) - g(\theta)$.
(6) The area of the region surrounded by the portion of $110 \leq \theta \leq 200$ of the curve $Q' = h(\theta)$ and line segment AB connecting point A (110, 0) and point B (200, 0) was determined to be St. Here, St is represented by the following

formula.

$$S_t = \int_{110}^{200} h(\theta)\, d\theta$$

(7) Two maximum points in the range of 110 ≤ θ ≤ 200 on the curve Q' = h(θ) were determined to be $R(\theta_\beta,h(\theta_\beta))$ and $S(\theta_\alpha,h(\theta_\alpha))$ (where $\theta_\beta < \theta_\alpha$), and the minimum point in the range of $\theta_\beta < \theta < \theta_\alpha$ on the curve Q' = h(θ) was determined to be $C(\theta\gamma,h(\theta_\gamma))$. A tangent was drawn to pass through point C and come into contact with the curve Q' = h(θ) in the range of $110 < \theta < \theta_\beta$, determining the contact point as point $D(\theta_\delta,h(\theta_\delta))$. Then, the area of a region surrounded by the portion of $\theta_\delta \leq \theta \leq \theta_\gamma$ of the curve Q' = h(θ) and line segment DC connecting point D and point C was determined to be $S_\beta$.

Here, $S_\beta$ is represented by the following formula,

$$S_\beta = \int_{\theta_\delta}^{\theta_\gamma} j(\theta)\, d\theta$$

wherein $j(\theta) = h(\theta) - i(\theta)$ and $i(\theta) = (h(\theta\gamma) - h(\theta_\delta))/(\theta_\gamma - \theta_\delta) \times (\theta - \theta_\gamma) + h(\theta_\gamma)$.

(8) A β crystal fraction (%) was calculated from $S_t$ and $S_\beta$ by the following formula.

$$\beta \text{ crystal fraction} = S_\beta/S_t \times 100(\%)$$

The results are also shown in Tables 1-4.

<Preparation of resin composition>

(Examples 1 to 13, Comparative Examples 1 to 10)

To 100 parts by mass of a polyolefin-based resin (homopolypropylene having a melt flow rate of 8 g/10 minutes as measured under conditions of a temperature of 230°C and a load of 2.16 kg in accordance with JIS K 7210), 0.05 parts by mass of tetrakis [methylene-3-(3',5'-di-tert-butyl-4'-hydroxyphenyl)propionate]methane as a phenolic antioxidant, 0.1 parts by mass of tris(2,4-di-tert-butylphenyl)phosphite as a phosphorus-based antioxidant, 0.05 parts by mass of calcium stearate as a fatty acid metal salt, and each nucleating agent composition in an amount for blending shown in Tables 5 to 9 were blended. The resultant was mixed using an FM mixer (model FM-20, manufactured by NIPPON COKE & ENGINEERING. CO., LTD.) for 1 minute at 40°C, melt-kneaded at a melting temperature of 230°C using a twin-screw extruder (Labo Plastomill Micro manufactured by Toyo Seiki Seisaku-sho, Ltd.), and then granulated to obtain the pellets of the resin composition. Note that in Tables 5 to 9, the unit of the amount of each resin composition blended and the content of each nucleating agent in the resin composition is parts by mass.

[Table 5]

| | | Example 1 | Example 2 | Example 3 | Example 4 |
|---|---|---|---|---|---|
| Nucleating agent composition | | Nucleating agent composition-1 | Nucleating agent composition-2 | Nucleating agent composition-3 | Nucleating agent composition-4 |
| Amount of nucleating agent composition blended | | 0.0525 | 0.0525 | 0.025 | 0.0115 |
| Content of nucleating agent | Nucleating agent-1 | 0.0025 | - | 0.01 | - |
| | Nucleating agent-2 | - | 0.0025 | - | 0.0025 |
| | Nucleating agent-4 | 0.05 | 0.05 | - | - |
| | Nucleating agent-5 | - | - | 0.015 | 0.009 |
| β crystal fraction (%) | | 27.2 | 11.2 | 26.4 | 3.2 |
| Flexural modulus (MPa) | | 1477 | 1789 | 1452 | 1663 |
| Charpy impact strength ($kJm^{-2}$) | | 10.8 | 6.6 | 12.0 | 10.1 |

[Table 6]

| | | Example 5 | Example 6 | Example 7 | Example 8 | Example 9 | Example 10 |
|---|---|---|---|---|---|---|---|
| Nucleating agent composition | | Nucleating agent composition-5 | Nucleating agent composition-6 | Nucleating agent composition-7 | Nucleating agent composition-8 | Nucleating agent composition-9 | Nucleating agent composition-10 |
| Amount of nucleating agent composition blended | | 0.325 | 0.305 | 0.33 | 0.305 | 0.06 | 0.1 |
| Content of nucleating agent | Nucleating agent-1 | 0.025 | 0.005 | - | - | - | - |
| | Nucleating agent-2 | - | - | 0.03 | 0.005 | 0.01 | - |
| | Nucleating agent-3 | - | - | - | - | - | 0.08 |
| | Nucleating agent-6 | 0.3 | 0.3 | 0.3 | 0.3 | - | - |
| | Nucleating agent-7 | - | - | - | - | 0.05 | 0.02 |
| β crystal fraction (%) | | 0.4 | 67.2 | 0.3 | 3.4 | 4.0 | 70.9 |
| Flexural modulus (MPa) | | 1837 | 1456 | 1754 | 1674 | 1671 | 1581 |
| Charpy impact strength ($kJm^{-2}$) | | 4.6 | 10.5 | 4.4 | 6.5 | 4.2 | 8.0 |

[Table 7]

| | | Comparative Example 1 | Comparative Example 2 | Comparative Example 3 | Comparative Example 4 | Comparative Example 5 |
|---|---|---|---|---|---|---|
| Nucleating agent composition | | Nucleating agent composition-11 | Nucleating agent composition-12 | Nucleating agent composition-13 | Nucleating agent composition-14 | Nucleating agent composition-15 |
| Amount of Nucleating agent composition blended | | 0.06 | 0.035 | 0.053 | 0.0315 | 0.08 |
| Content of nucleating agent | Nucleating agent-1 | 0.05 | - | 0.05 | - | 0.05 |
| | Nucleating agent-2 | - | 0.03 | - | 0.03 | - |
| | Nucleating agent-3 | - | - | - | - | - |
| | Nucleating agent-4 | 0.01 | 0.005 | - | - | - |
| | Nucleating agent-5 | - | - | 0.003 | 0.0015 | - |
| | Nucleating agent-6 | - | - | - | - | 0.03 |
| | Nucleating agent-7 | - | - | - | - | - |
| β crystal fraction (%) | | 0 | 0 | 0 | 0 | 0 |
| Flexural modulus (MPa) | | 1918 | 1945 | 1903 | 1815 | 1904 |
| Charpy impact strength ($kJm^{-2}$) | | 3.5 | 3.0 | 3.7 | 3.8 | 3.5 |

[Table 8]

| | | Comparative Example 6 | Comparative Example 7 | Comparative Example 8 | Comparative Example 9 |
|---|---|---|---|---|---|
| Nucleating agent composition | | Nucleating agent composition-16 | Nucleating agent composition-17 | Nucleating agent composition-18 | None |
| Amount of nucleating agent composition blended | | 0.06 | 0.0325 | 0.05 | - |
| Content of nucleating agent | Nucleating agent-1 | - | - | - | - |
| | Nucleating agent-2 | 0.03 | 0.03 | - | - |
| | Nucleating agent-3 | - | - | - | - |
| | Nucleating agent-4 | - | - | - | - |
| | Nucleating agent-5 | - | - | - | - |
| | Nucleating agent-6 | 0.03 | - | - | - |
| | Nucleating agent-7 | - | 0.0025 | 0.05 | - |
| β crystal fraction (%) | | 0 | 0 | 77.0 | 0 |
| Flexural modulus (MPa) | | 1755 | 1852 | 1388 | 1372 |
| Charpy impact strength ($kJm^{-2}$) | | 3.7 | 2.8 | 10.9 | 3.4 |

[Table 9]

| | | Example 11 | Example 12 | Example 13 | Comparative Example 10 |
|---|---|---|---|---|---|
| Nucleating agent composition | | Nucleating agent composition-19 | Nucleating agent composition-20 | Nucleating agent composition-21 | Nucleating agent composition-22 |
| Amount of nucleating agent composition blended | | 0.1 | 0.1 | 0.1 | 0.035 |
| Content of nucleating agent | Nucleating agent-1 | 0.025 | 0.0077 | - | - |
| | Nucleating agent-2 | - | - | 0.0167 | 0.03 |
| | Nucleating agent-3 | - | - | - | - |
| | Nucleating agent-4 | - | - | - | 0.005 |
| | Nucleating agent-5 | 0.075 | - | - | - |
| | Nucleating agent-6 | - | 0.0923 | - | - |
| | Nucleating agent-7 | - | - | 0.0833 | - |
| β crystal fraction (%) | | 66.3 | 45.4 | 33.1 | 0.04 |
| Flexural modulus (MPa) | | 1477 | 1471 | 1690 | 1945 |
| Charpy impact strength ($kJm^{-2}$) | | 11.2 | 7.9 | 6.3 | 3.0 |

<Calculation of β crystal fraction>

The β crystal fractions of the resin compositions obtained as described above were calculated by the following method.

(1) After a resin composition was dried at 80°C for 8 hours, 10 mg of a sample was sampled from the dried pellets, and then the sample was introduced into a differential scanning calorimeter (manufactured by PerkinElmer Co., Ltd., Diamond).
(2) Using the differential scanning calorimeter, differential scanning calorimetry was performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, $Q = f(\theta)$, with the horizontal axis being temperature $\theta$ (°C) and the vertical axis being heat flow rate Q(mW). Here, regarding the vertical axis, the endothermic direction was assumed to be positive.
(3) In a portion of the DSC curve, which corresponds to the second temperature rising process in the above temperature program, a baseline $g(\theta) = (f(200) - f(110))/90 \times (\theta - 110) + f(110)$ was subtracted from $f(\theta)$ to obtain a baseline-corrected DSC curve, $Q' = h(\theta) = f(\theta) - g(\theta)$.
(4) The area of a region surrounded by the portion of $110 \leq \theta \leq 200$ of the curve $Q' = h(\theta)$ and line segment AB

connecting point A (110, 0) and point B (200, 0) was determined to be St. Here, St is represented by the following formula.

$$S_t = \int_{110}^{200} h(\theta)\, d\theta$$

(5) Two maximum points in the range of $110 \leq \theta \leq 200$ on the curve $Q' = h(\theta)$ were determined to be $R(\theta_\beta, h(\theta_\beta))$ and $S(\theta_\alpha, h(\theta_\alpha))$ (where $\theta_\beta < \theta_\alpha$), and the minimum point in the range of $\theta_\beta < \theta < \theta_\alpha$ on the curve $Q' = h(\theta)$ was determined to be $C(\theta\gamma, h(\theta_\gamma))$. Then a tangent was drawn to pass through point C and come into contact with the curve $Q' = h(\theta)$ in the range of $110 < \theta < \theta_\beta$, determining the contact point as point D $(\theta_\delta, h(\theta_\delta)$. Then, the area of a region surrounded by the portion of $\theta_\delta \leq \theta \leq \theta_\gamma$ of the curve $Q' = h(\theta)$ and line segment DC connecting point D and point C was determined to be $S_\beta$.
Here, $S_\beta$ is represented by the following formula,

$$S_\beta = \int_{\theta_\delta}^{\theta_\gamma} j(\theta)\, d\theta$$

wherein $j(\theta) = h(\theta) - i(\theta)$ and $i(\theta) = (h(\theta\gamma) - h(\theta_\delta))/(\theta_\gamma - \theta_\delta) \times (\theta - \theta_\gamma) + h(\theta_\gamma)$.
(6) A $\beta$ crystal fraction (%) was calculated from $S_t$ and $S_\beta$ by the following formula.

$$\beta \text{ crystal fraction} = S_\beta / S_t \times 100(\%)$$

The results are also shown in Tables 5-9.

In addition, FIG. 1 depicts a graph of a portion of a DSC curve, $Q = f(\theta)$, wherein the portion corresponds to the second temperature rising process, and the DSC curve was obtained by performing differential scanning calorimetry for the resin compositions to which nucleating agent composition 2 had been added in Examples. FIG. 2 depicts a graph of a baseline-corrected DSC curve, $Q' = h(\theta) = f(\theta) - g(\theta)$, obtained by subjecting a portion of a DSC curve, $Q = f(\theta)$, to baseline correction, wherein the portion corresponds to the second temperature rising process, and the DSC curve was obtained for the resin composition to which nucleating agent composition 2 had been added in Examples.

<Characteristic evaluation>

The mechanical properties of molded articles obtained by molding the resin composition pellets of Examples 1 to 13 and Comparative Examples 1 to 10 were evaluated by measuring the flexural modulus and Charpy impact strength according to the following.

(Flexural modulus)

After the pellets of each resin composition of Examples 1 to 13 and Comparative Examples 1 to 10 were dried at 80°C for 8 hours, injection molding was performed using an injection molding machine (manufactured by Toshiba Machine Co., Ltd., EC-220) at a resin temperature of 230°C and a mold temperature of 40°C, thereby preparing bending test pieces with a size of 80 mm × 10 mm × 4 mm. The test pieces were left to stand in an incubator at a temperature of 23°C and a humidity of 50% for 48 hours, removed from the incubator, and then subjected to measurement of flexural modulus (MPa) in accordance with ISO178 using a bending tester (manufactured by Shimadzu Corporation, AG-IS). The results are also shown in Tables 5 to 9.

(Charpy impact strength)

The resin composition pellets of Examples 1 to 13 and Comparative Examples 1 to 10 were dried at 80°C for 8 hours, and then molded with an injection molding machine (device: manufactured by NISSEI PLASTIC INDUSTRIAL

CO., LTD., horizontal injection molding machine NEX80) under processing conditions of a resin temperature of 230°C and a mold temperature of 40°C, thereby preparing test pieces each having a size of 80 mm × 10 mm × 4 mm and a V-shaped notch in the center for Charpy impact strength measurement. The test pieces were left to stand in an incubator at a temperature of 23°C and a humidity of 60% for 7 days, removed from the incubator, and then subjected to measurement of Charpy impact strength ($kJ/m^2$) in accordance with ISO 179-1. The results are also shown in Tables 5 to 9.

From the results shown in Tables 5 to 9, the resin compositions of Examples 1 to 13 had excellent rigidity and excellent impact resistance. On the other hand, it could not be said that the resin compositions of Comparative Examples 1 to 10 had sufficient rigidity or impact resistance.

From the above, it was confirmed that according to the nucleating agent composition of the present invention, excellent mechanical properties can be imparted to molded articles containing polyolefin-based resins.

## Claims

1. A nucleating agent composition, comprising at least one type of a nucleating agent for a polyolefin-based resin, wherein a β crystal fraction ranges from 0.2% to 71% as calculated by the following method.
<Method for calculating β crystal fraction>

(1) 100 parts by mass of homopolypropylene having a melt flow rate of 8 g/10 minutes in accordance with JIS K 7210 as measured under conditions of a temperature of 230°C and a load of 2.16 kg, 0.10 parts by mass of the nucleating agent composition, 0.05 parts by mass of tetrakis[methylene-3-(3',5'-tert-butyl-4'-hydroxyphenyl)propionate]methane, 0.1 parts by mass of tris(2,4-di-tert-butylphenyl)phosphite), and 0.05 parts by mass of calcium stearate are blended, and then mixed for 1 minute using an FM mixer to obtain a resin blend.
(2) Using a twin-screw extruder, the resin blend is melt-kneaded at a melting temperature of 230°C, and the resulting melt-kneaded product is granulated to obtain pellets.
(3) After the pellets are dried at 80°C for 8 hours, 10 mg of a sample is sampled from the dried pellets and then introduced into a differential scanning calorimeter.
(4) Using the differential scanning calorimeter, differential scanning calorimetry is performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, $Q = f(\theta)$, with the horizontal axis being temperature θ(°C) and the vertical axis being heat flow rate Q(mW). Here, regarding the vertical axis, the endothermic direction is assumed to be positive.
(5) In a portion of the DSC curve, which corresponds to the second temperature rising process in the temperature program, a baseline $g(\theta) = (f(200) - f(110))/90 \times (\theta\ 110) + f(110)$ is subtracted from $f(\theta)$ to obtain a baseline-corrected DSC curve, $Q' = h(\theta) = f(\theta) - g(\theta)$.
(6) The area of a region surrounded by the portion of $110 \leq \theta \leq 200$ of the curve $Q' = h(\theta)$ and line segment AB connecting point A (110, 0) and point B (200, 0) is determined to be St. Here, St is represented by the following formula.

$$St = \int_{110}^{200} h(\theta)\, d\theta$$

(7) Two maximum points in the range of $110 \leq \theta \leq 200$ on the curve $Q' = h(\theta)$ are determined to be $R(\theta_\beta, h(\theta_\beta))$ and $S(\theta_\alpha, h(\theta_\alpha))$ (where $\theta_\beta < \theta_\alpha$), and the minimum point in the range of $\theta_\beta < \theta < \theta_\alpha$ on the curve $Q' = h(\theta)$ is determined to be $C(\theta\gamma, h(\theta_\gamma))$. A tangent is drawn to pass through point C and come into contact with the curve $Q' = h(\theta)$ in the range of $110 < \theta < \theta_\beta$, determining the contact point as point $D(\theta_\delta, h(\theta_\delta))$. Then, the area of a region surrounded by the portion of $\theta_\delta \leq \theta \leq \theta_\gamma$ of the curve $Q' = h(\theta)$ and line segment DC connecting point D and point C is determined to be $S_\beta$.
Here, $S_\beta$ is represented by the following formula,

$$S_\beta = \int_{\theta_\delta}^{\theta_\gamma} j(\theta)\, d\theta$$

wherein $j(\theta) = h(\theta) - i(\theta)$ and $i(\theta) = (h(\theta\gamma) - h(\theta_\delta))/(\theta_\gamma - \theta_\delta) \times (\theta - \theta_\gamma) + h(\theta_\gamma)$.
(8) A β crystal fraction (%) is calculated from $S_t$ and $S_\beta$ above by the following formula.

$$\beta \text{ crystal fraction} = S_\beta/S_t \times 100(\%)$$

2. The nucleating agent composition according to claim 1, comprising an α-crystal nucleating agent that promotes the α crystal formation by a polyolefin-based resin.

3. The nucleating agent composition according to claim 1 or 2, comprising a β-crystal nucleating agent that promotes the β-crystal formation by a polyolefin-based resin.

4. The nucleating agent composition according to claim 3, wherein the β-crystal nucleating agent comprises at least one type selected from the group consisting of a carboxylic acid metal salt and a quinacridone compound.

5. A resin composition, comprising a polyolefin-based resin and at least one type of a nucleating agent for a polyolefin-based resin,
wherein a β crystal fraction ranges from 0.2% to 71% as calculated by the following method.
<Method for calculating β crystal fraction>

(1) After the resin composition is dried at 80°C for 8 hours, 10 mg of a sample is sampled from the dried pellets, and then the sample is introduced into a differential scanning calorimeter.
(2) Using the differential scanning calorimeter, differential scanning calorimetry is performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, $Q = f(\theta)$, with the horizontal axis being temperature θ (°C) and the vertical axis being heat flow rate Q(mW). Here, regarding the vertical axis, the endothermic direction is assumed to be positive.
(3) In a portion of the DSC curve, which corresponds to the second temperature rising process in the temperature program, a baseline $g(\theta) = (f(200) - f(1\ 10))/90 \times (\theta - 110) + f(110)$ is subtracted from $f(\theta)$ to obtain a baseline-corrected DSC curve, $Q' = h(\theta) = f(\theta) - g(\theta)$.
(4) The area of a region surrounded by the portion of $110 \le \theta \le 200$ of the curve $Q' = h(\theta)$ and line segment AB connecting point A (110, 0) and point B (200, 0) is determined to be St. Here, St is represented by the following formula.

$$S_t = \int_{110}^{200} h(\theta)\, d\theta$$

(5) Two maximum points in the range of $110 \le \theta \le 200$ on the curve $Q' = h(\theta)$ are determined to be $R(\theta_\beta, h(\theta_\beta))$ and $S(\theta_\alpha, h(\theta_\alpha))$ (where $\theta_\beta < \theta_\alpha$), and the minimum point in the range of $\theta_\beta < \theta < \theta_\alpha$ on the curve $Q' = h(\theta)$ is determined to be $C(\theta\gamma, h(\theta_\gamma))$. Then a tangent is drawn to pass through point C and come into contact with the curve $Q' = h(\theta)$ in the range of $110 < \theta < \theta_\beta$, determining the contact point as point D $(\theta_\delta, h(\theta_\delta))$. Then, the area of a region surrounded by the portion of $\theta_\delta \le \theta \le \theta_\gamma$ of the curve $Q' = h(\theta)$ and line segment DC connecting point D and point C is determined to be $S_\beta$.
Here, $S_\beta$ is represented by the following formula,

$$S_\beta = \int_{\theta_\delta}^{\theta_\gamma} j(\theta)\, d\theta$$

wherein j (θ) = h(θ) - i(θ) and i(θ) = (h(θγ) - h($\theta_\delta$))/($\theta_\gamma$ - $\theta_\delta$) × (θ - $\theta_\gamma$) + h($\theta_\gamma$).

(6) A β crystal fraction (%) is calculated from $S_t$ and $S_\beta$ above by the following formula.

$$\beta \text{ crystal fraction} = S_\beta/S_t \times 100(\%)$$

**6.** The resin composition according to claim 5, comprising an α-crystal nucleating agent that promotes the α crystal formation by a polyolefin-based resin.

**7.** The resin composition according to claim 5 or 6, comprising a β-crystal nucleating agent that promotes the β-crystal formation by a polyolefin-based resin.

**8.** The resin composition according to claim 7, wherein the β-crystal nucleating agent comprises at least one type selected from the group consisting of a carboxylic acid metal salt and a quinacridone compound.

**9.** A molded article, which is obtained by molding the resin composition according to any one of claims 5 to 8.

**10.** A method for manufacturing a resin composition, comprising a blending step of blending at least one type of a nucleating agent for a polyolefin-based resin in a polyolefin-based resin, in such a manner that a β crystal fraction ranges from 0.2% to 71% as calculated by the following method.

<Method for calculating β crystal fraction>

(1) After the resin composition is dried at 80°C for 8 hours, 10 mg of a sample is sampled from the dried pellets, and then the sample is introduced into a differential scanning calorimeter.

(2) Using the differential scanning calorimeter, differential scanning calorimetry is performed according to a temperature program of heating the sample from 25°C to 230°C at a rate of 50°C/min, maintaining the sample at 230°C for 20 minutes, cooling the sample to 50°C at a rate of 100°C/min, maintaining the sample at 50°C for 20 minutes, and then increasing the temperature to 230°C at a rate of 30°C/min, thereby obtaining a DSC curve, Q = f(θ), with the horizontal axis being temperature θ(°C) and the vertical axis being heat flow rate of Q(mW). Here, regarding the vertical axis, the endothermic direction is assumed to be positive.

(3) In a portion of the DSC curve, which corresponds to the second temperature rising process in the temperature program, a baseline g(θ) = (f(200) - f(110))/90 × (θ - 110) + f(110) is subtracted from f(θ) to obtain a baseline-corrected DSC curve, Q' = h(θ) = f(θ) - g(θ).

(4) The area of a region surrounded by the portion of 110 ≤ θ ≤ 200 of the curve Q' = h(θ) and line segment AB connecting point A (110, 0) and point B (200, 0) is determined to be St. Here, St is represented by the following formula.

$$S_t = \int_{110}^{200} h(\theta)\, d\theta$$

(5) Two maximum points in the range of 110 ≤ θ ≤ 200 on the curve Q' = h(θ) are determined to be R($\theta_\beta$,h($\theta_\beta$)) and S($\theta_\alpha$,h($\theta_\alpha$)) (where $\theta_\beta < \theta_\alpha$), and the minimum point in the range of $\theta_\beta < \theta < \theta_\alpha$ on the curve Q' = h(θ) is determined to be C($\theta_\gamma$,h($\theta_\gamma$)). Then a tangent is drawn to pass through point C and come into contact with the curve Q' = h(θ) in the range of 110 < θ < $\theta_\beta$, determining the contact point as point D ($\theta_\delta$,h($\theta_\delta$)). Then, the area of a region surrounded by the portion of $\theta_\delta \le \theta \le \theta_\gamma$ of the curve Q' = h(θ) and line segment DC connecting point D and point C is determined to be $S_\beta$.

Here, $S_\beta$ is represented by the following formula,

$$S_\beta = \int_{\theta_\delta}^{\theta_\gamma} j(\theta)\, d\theta$$

wherein $j(\theta) = h(\theta) - i(\theta)$ and $i(\theta) = (h(\theta_\gamma) - h(\theta_\delta))/(\theta_\gamma - \theta_\delta) \times (\theta - \theta_\gamma) + h(\theta_\gamma)$.

(6) A β crystal fraction (%) is calculated from $S_t$ and $S_\beta$ above by the following formula.

$$\beta \text{ crystal fraction} = S_\beta/S_t \times 100(\%)$$

FIG. 1

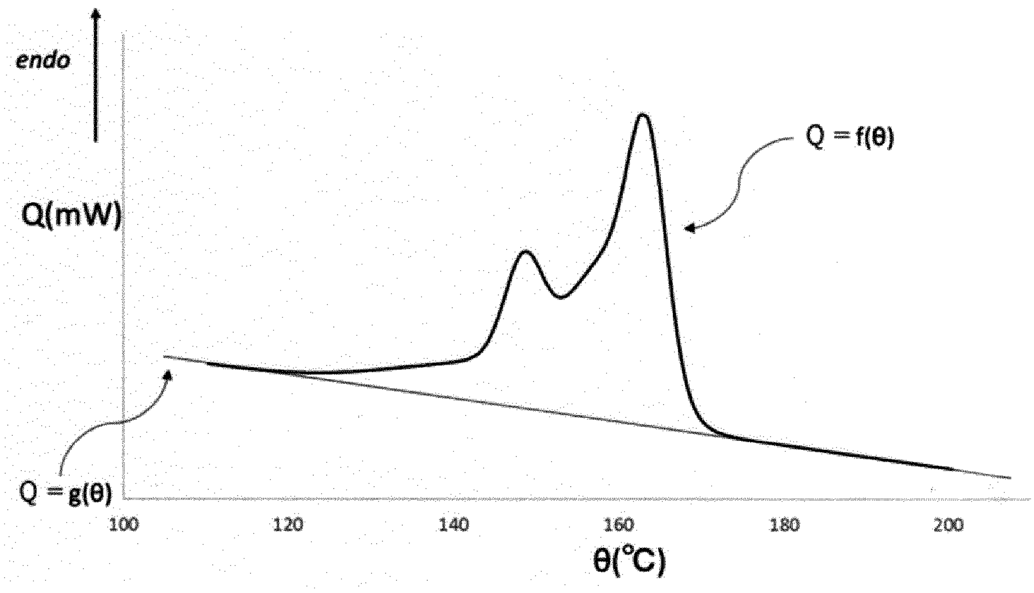
endo
Q(mW)
Q = f(θ)
Q = g(θ)
100
120
140
160
180
200
θ(°C)

FIG. 2

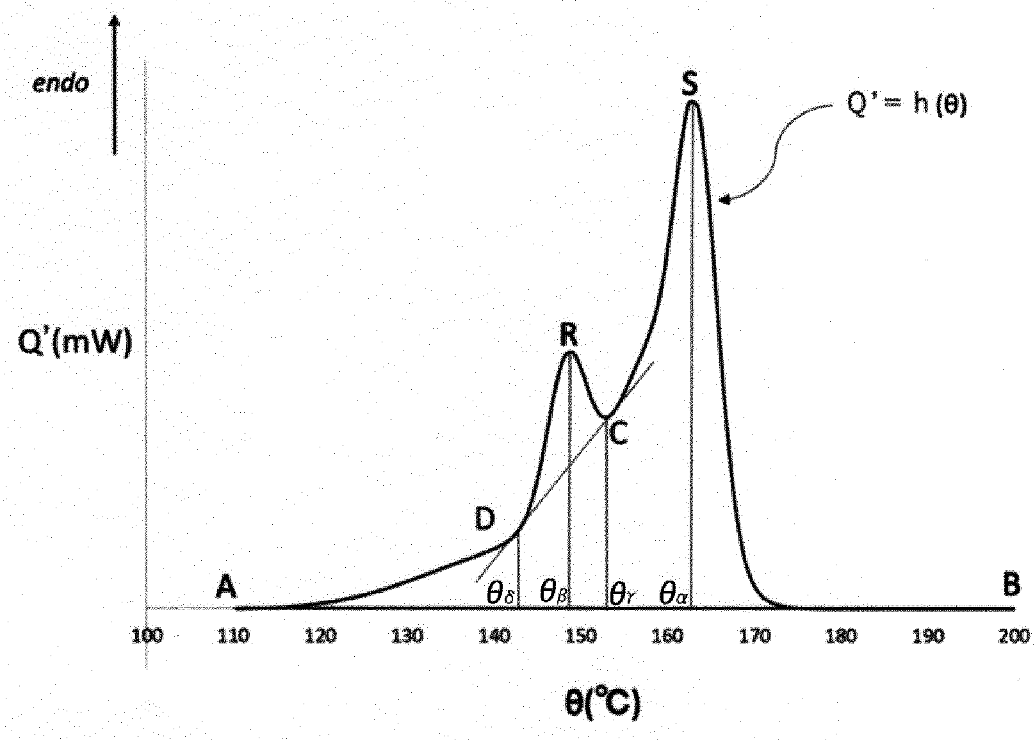
endo
Q'(mW)
S
Q' = h (θ)
R
C
D
A
B
θδ
θβ
θγ
θα
100
110
120
130
140
150
160
170
180
190
200
θ(°C)

## INTERNATIONAL SEARCH REPORT

International application No.
**PCT/JP2022/023965**

**A. CLASSIFICATION OF SUBJECT MATTER**

***C08L 23/00***(2006.01)i
FI: C08L23/00

According to International Patent Classification (IPC) or to both national classification and IPC

**B. FIELDS SEARCHED**

Minimum documentation searched (classification system followed by classification symbols)

C08L1/00-101/14, C08K3/00-13/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-035356 A (LCY CHEMICAL CORP) 08 March 2018 (2018-03-08) claim 1, paragraphs [0032]-[0042], [0084]-[0112], [0125]-[0130], table 2, fig. 6, examples 2-8 | 1-9 |
| A | | 10 |
| X | JP 2012-046692 A (JAPAN POLYPROPYLENE CORP) 08 March 2012 (2012-03-08) claims 1, 3, 7, paragraphs [0054], [0128]-[0140], [0142], table 2, example 11 | 1-3, 5-7, 9 |
| A | | 4, 8, 10 |
| X | CN 103965545 A (CHINA PETROLEUM & CHEMICAL CORPORATION) 06 August 2014 (2014-08-06) claim 1, paragraphs [0011]-[0012], [0049]-[0050], [0070]-[0074], [0078]-[0079], table 1, examples 2, 15-17 | 1-3, 5-7, 9 |
| A | | 4, 8, 10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/023965**

**C. DOCUMENTS CONSIDERED TO BE RELEVANT**

| Category* | Citation of document, with indication, where appropriate, of the relevant passages | Relevant to claim No. |
|---|---|---|
| X | WO 2020/137179 A1 (ADEKA CORP) 02 July 2020 (2020-07-02) claims 1, 5, 10, paragraphs [0022]-[0026], [0047], [0115]-[0120], table 1, examples 1-2 to 1-4, 1-6 to 1-10 | 1, 3-5, 7-9 |
| A | | 2, 6, 10 |
| X | JP 02-227437 A (TORAY INDUSTRIES) 10 September 1990 (1990-09-10) claims 1, 3, p. 4, upper left column, line 15 to p. 4, upper right column, line 17, p.6, upper left column, line 19 to p. 6, upper right column, line 7, p.6, lower right column, line 17 to p. 7, upper left column, line 16, tables 1, 3, example 3 | 1, 3-5, 7-10 |
| A | | 2, 6 |
| A | JP 2016-160267 A (JAPAN STEEL WORKS LTD) 05 September 2016 (2016-09-05) entire text | 1-10 |
| A | JP 2015-048406 A (TORAY INDUSTRIES) 16 March 2015 (2015-03-16) entire text | 1-10 |

Form PCT/ISA/210 (second sheet) (January 2015)

**INTERNATIONAL SEARCH REPORT**
**Information on patent family members**

International application No.
**PCT/JP2022/023965**

| Patent document cited in search report | Publication date (day/month/year) | Patent family member(s) | Publication date (day/month/year) |
|---|---|---|---|
| JP 2018-035356 A | 08 March 2018 | US 2018/0057651 A1<br>claim 1, paragraphs [0035]-[0045], [0082]-[0109], [0120]-[0123], table 2, fig. 6, examples 2-8<br>EP 3290467 A1<br>CN 107793635 A<br>KR 10-2018-0025192 A<br>TW 201811899 A | |
| JP 2012-046692 A | 08 March 2012 | (Family: none) | |
| CN 103965545 A | 06 August 2014 | (Family: none) | |
| WO 2020/137179 A1 | 02 July 2020 | US 2021/0403655 A1<br>claims 1, 5-10, paragraphs [0026]-[0028], [0048], [0114]-[0118], table 1, examples 1-2 to 1-4, 1-6 to 1-10<br>EP 3904446 A1<br>KR 10-2021-0106340 A<br>BR 112021001632 A<br>AU 2019417011 A<br>CN 113072758 A<br>TW 202033644 A | |
| JP 02-227437 A | 10 September 1990 | (Family: none) | |
| JP 2016-160267 A | 05 September 2016 | US 2018/0037704 A1<br>entire text<br>WO 2016/136881 A1<br>EP 3263636 A1<br>KR 10-2017-0107547 A<br>CN 107428977 A | |
| JP 2015-048406 A | 16 March 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008120931 A
- JP S462280 A
- JP 50030039 A
- JP S5129129 A
- JP H336839 B
- JP S61174270 A
- JP H5179052 A
- JP 2010132927 A
- JP H710989 A
- US 6552131 B
- JP 2016023254 A